# EUROPEAN PATENT APPLICATION

(11) **EP 4 239 479 A1**
(43) Date of publication of application: **06.09.2023**
(21) Application number: 23159878.0
(22) Date of filing: 03.03.2023
(51) Int. Cl.: G06F 9/50

(54) **ORCHESTRATION OF COMPUTING SERVICES AND RESOURCES FOR NEXT GENERATION SYSTEMS**

(30) Priority: 03.03.2022 US 202263316287 P
(71) Applicant: INTEL Corporation, Santa Clara, CA 95054 (US)
(72) Inventor: CHOU, Joey, Scottsdale, 85258 (US); LU, Xusheng, Chandler, 85226 (US); YAO, Yizhi, Chandler, 85248 (US)
(74) Representative: Viering, Jentschura & Partner mbB Patent- und Rechtsanwälte

(57) **Abstract**

An apparatus of a next generation distributed cloud system for resource orchestration, comprising one or more processors, configured to: receive, from one or more computing functions, first information about computing resources for the one or more computing functions; receive, from a second entity, a request to provide one or more available computing functions for supporting one or more computing services; select one or more computing functions from the one or more available computing functions for the request, based on the received first information; and provide the selected one or more available computing functions, in a response, to the second entity.

## Description

### CROSS-REFERENCE TO RELATED APPLICATIONS

This application claims priority to US Provisional Application 63/316,287, filed on March 3, 2023, the entire contents of which are incorporated herein by reference.

### BACKGROUND

Various embodiments may generally relate to the field of wireless communications and in particular next generation mobile systems, also referred to as sixth-generation (6G) systems, in which ubiquitous computing services are provided by the distributed cloud system with built-in cloud native technology. These distributed cloud systems can support balancing between in-node computation and distributed computation to optimize resource usage and power consumption while meeting the task's KPI requirements (e.g., latency and/or data rate). The computations may occur at different points in the network depending on device/network capabilities and application requirements. The scale of the mobile system can be leveraged to extend compute services beyond central data centers to encompass network compute and mobile device compute.

### BRIEF DESCRIPTION OF THE FIGURES

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts a distributed cloud system;
FIG. 2 depicts an example of a system for orchestration of computing services and resources for a next generation system;
FIG. 3 depicts a service based system framework for orchestration of computing services and resources; and
FIG. 4 depicts a functional view of the system framework, based on the service based system framework according to option 1;
FIG. 5 depicts the functional view of the system framework, based on the service based system framework according to option 2;
FIG. 6 depicts a functional view of the system framework according to option 3, based on the service based system framework of option 1.
FIG. 7 depicts a mechanism according to option 4, in which coordination between the control function and the registration and discovery function occurs with support of the resource management function;
FIG. 8 illustrates a network in accordance with various embodiments;
FIG. 9 schematically illustrates a wireless network in accordance with various embodiments;
FIG. 10 is a block diagram illustrating components; and
FIG. 11 depicts a process.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

In next generation mobile systems, also referred to as sixth-generation (6G) systems, ubiquitous computing services are provided by the distributed cloud system with built-in cloud native technology. The distributed cloud system supports balancing between in-node computation and distributed computation to optimize resource usage and power consumption while meeting the task's KPI requirements (e.g., latency and/or data rate). The computations may occur at different points in the network depending on device/network capabilities and application requirements. The scale of the mobile system can be leveraged to extend compute services beyond central data centers to encompass network compute and mobile device compute.

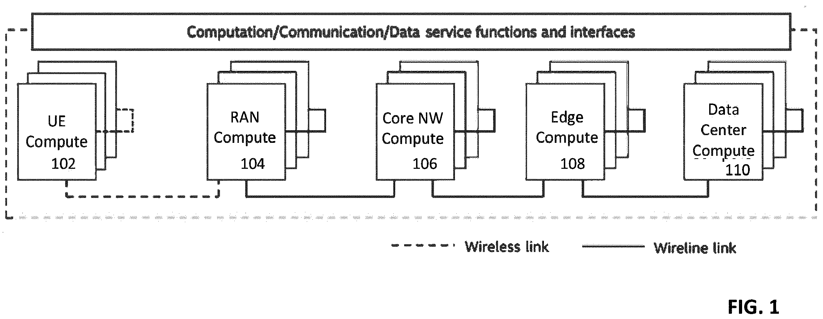

FIG. 1 depicts a distributed cloud system, as described herein. The distributed cloud system may include a UE compute 102, a RAN compute 104, a core network compute 106, an edge compute 108, a data center compute 110, or any of these.

The system needs to support a dynamic computing workload distribution with a service continuum across mobile devices (e.g. mobile device compute), the network (e.g. the network computes), and the edge/data center (e.g. the edge/data center compute).

The computing services and the computing resources need to be orchestrated to provide functionality such as:
- allocating suitable computing resource to the users, with consideration of UE location, UE capability, QoS requirements, service category, resource capacity requirements, capacity, capability, usage and status of computing nodes, etc.
- dynamic resource adjustment according to a user's request;
- load balancing and sharing between computing nodes.

Among other things, embodiments of the present disclosure are directed to the orchestration of computing services and resources for next generation systems. Some embodiments help enable ubiquitous computing services for next generation mobile systems. It should be noted that the names of the functions described herein are exemplary only, and alternate embodiments may have the same (or different) names for components and functions.

A system framework in accordance with some aspects of this disclosure will be described in more detail below.

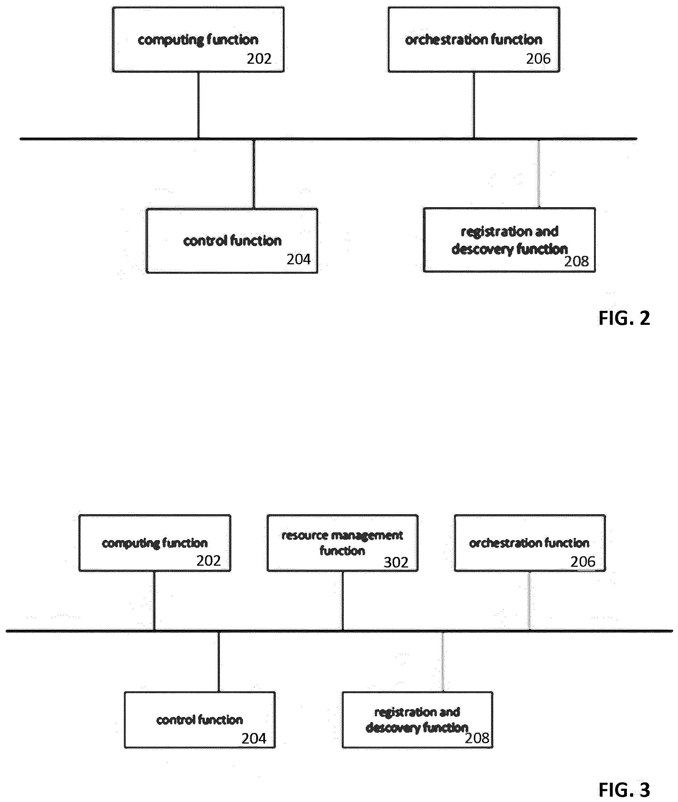

A first option of an implementation of the system framework is shown in FIG. 2.

FIG. 2 depicts an example of a system for orchestration of computing services and resources for next generation systems including the following functions:
- a computing function 202, which provides the computing resources and/or services;
- a control function 204, which provides the service to control the user's request for the computing service;
- an orchestration function 206, which provides the service or services to manage and orchestrate the computing resource and services; and
- a registration and discovery function 208, which provides the service or services to register and discover the related functions and services.

A second option of an implementation of the system framework is shown in FIG. 3.

FIG. 3 depicts a service based system framework for orchestration of computing services and resources - otherwise referred to as Option 2.

In this option, compared to option 1, the system includes an additional function called the resource management function 302, which provides the services for managing the computing resources, while the orchestration function does not manage the computing resources directly.

In the following, mechanisms for orchestration of computing services and resources will be described. It is expressly noted that the sequence of steps in all of the mechanisms are exemplary only, and alternate embodiments may include some steps performed in a different order.

A first option of an implementation of a mechanism for coordination between the control function and the orchestration function.

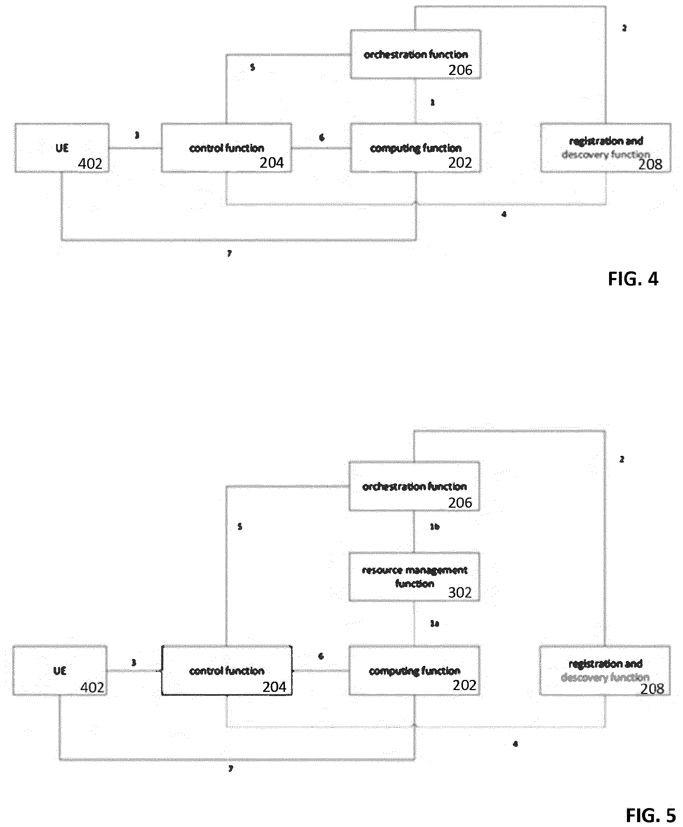

FIG. 4 depicts a functional view of the system framework, based on the service-based system framework of option 1, above.
1. The orchestration function 206 may manage and orchestrate the computing resources provided by the computing functions 202. The orchestration function 206 may receive any of the following information from each computing function 202:
   - total capacity and type of resources provided by each computing function;
   - usage, and/or available capacity of each computing function;
   - status (e.g., alarms) of the computing resource and computing function;
   - energy efficiency level of the computing resources;
   - type of services supported by each computing function; and/or
   - location of the computing resources (or computing function).

The orchestration function may manage an affinity and/or anti-affinity relation between computing functions.
2. The orchestration function 206 may register itself, or be registered, to the registration and discovery function 208, with some or all of the following information:
   - service area (e.g., geographical area) of the orchestration function;
   - total capacity and types of resources orchestrated by the orchestration function; and/or
   - type of services supported by each computing function orchestrated by the orchestration function.
3. UE 402 may send to the control function a request to use the computing services, wherein the request may be for a new service or for updating an existing service. The information may be related to some or all of:
   - LTE location;
   - type of computing service;
   - resource requirements for the computing service; and/or
   - QoS requirements for the computing service.

It is noted that the other nodes (e.g., RAN nodes, access control nodes, etc.), which the message may be passed over (e.g., through which the message may be passed) between LTE and control function, are not shown for purposes of simplicity.
4. The control function 204 may select the orchestration function 206 to request the computing resources. If no suitable orchestration function is known, the control function 204 may request the registration and discovery function 208 to provide the available orchestration function or functions 206 that can serve the UE location and type of service requested by the user. The request from the control function 204 may include information about the service location and the service type. The registration and discovery function 208 may look up the available orchestration function or functions per the request received from the control function 204, and may provide a suitable orchestration function or functions 206 to the control function 204. If multiple orchestration functions are provided, the control function 204 may then select one to continue the service request.
5. The control function 204 may select the computing function 202 to fulfill the user's service request. If no suitable computing function 202 is known, the control function 204 may request the orchestration function 206, determined in step 4, above, to provide the available computing function or functions 202 that can serve (e.g., satisfy) service requests by the UE. The request from the control function 204 may include some or all of the information about the service location, service type, resource requirements and QoS requirements. The orchestration function 206 may look up the available computing function or functions per the request received from the control function, and may provide the suitable computing function or functions 202 to the control function 204. If multiple computing functions are provided, the control function 204 may then select a computing function of the multiple computing functions to continue the service request.
6. The control function 204 may request the computing function 202, determined by step 5, to fulfill the service request for the user. The request from the control function 204 may include some or all information about any of the service location, service type, resource requirements, and/or QoS requirements. The computing function 202 may acknowledge the requests, and it may respond with a result of whether the service request is accepted.
7. If the service request is accepted by the computing function 202, the control function 204 may inform the LTE to continue the service, and the LTE 402 and computing function 202 may exchange the user data to fulfill the computing service.

For completeness, it is noted that the other nodes (e.g., additional nodes such as RAN nodes, data plane function, etc.), over which the data may be passed between the UE and computing function are not shown.

A second option of an implementation of a mechanism for coordination between the control function and the orchestration function is shown in FIG. 5.

In the second option, there is a coordination between the control function and the orchestration function with support of the resource management function.

FIG. 5 depicts a functional view of the system framework, based on the service based system framework of option 2.

A difference between option 2 and option 1 is that in option 2, the orchestration function 206 does not directly manage the computing resources from the computing function 204, but rather via a resource management function 302.

1a. The resource management function 302 manages the computing resources provided by the computing function 202, for the information listed in step 1 of option 1.

1b. The resource management function 302 provides the information obtained in step 1a to the orchestration function 206.

The other steps of option 2 are the same as in option 1.

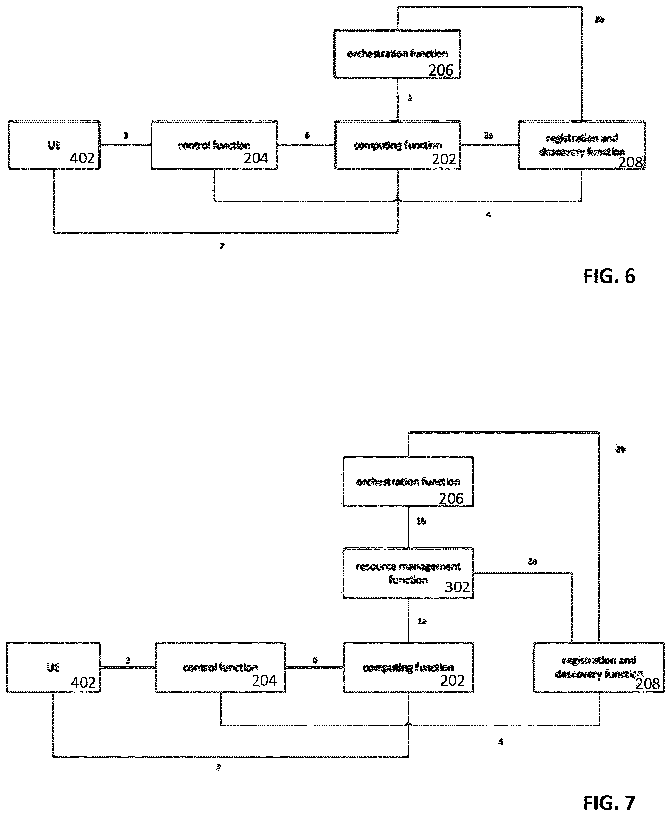

A third option of an implementation of a mechanism for coordination between the control function and the orchestration function is shown in FIG. 6.

The third option provides a coordination between the control function and the registration and discovery function with support of the resource management function.

FIG. 6 depicts a functional view of the system framework according to option 3, based on the service based system framework of option 1.
1. The same as step 1 of option 1.
2. The computing function 202 may register itself to the registration and discovery function 208.
2a. When the computing function 202 registers itself, it may report its status to the registration and discovery function 208, with any of the following information:
   - service area (e.g., geographical area) of the computing function 202;
   - total capacity and types of resources supported by the computing function 202;
   - energy efficiency level of the computing resources;
   - type of services supported by the computing function 202;
   - usage and/or available capacity of the computing function 202; and/or
   - status (e.g., alarms) of the computing resource and computing function 202.
2b. The orchestration function may register the computing function 202 to the registration and discovery function 208, with the same information as listed in 2a above, and optionally with additional information, such as an affinity and/or anti-affinity relation between computing functions.
3. The same as in step 3 of option 1, above.
4. The control function 204 selects the computing function 202 to fulfill the user's service request. If no suitable computing function is known, the control function 204 may request the registration and discovery function 208 to provide the available computing function or available computing functions 202 that can serve (e.g. provide, perform) the service requested by the UE. The request from the control function may include some or all the information about service location, service type, resource requirements, and/or QoS requirements. The registration and discovery function 208 may look up the available computing function(s) 202 per the request received from the control function 204, and it may provide the one or more computing functions 202 (e.g. one or more suitable computing functions) to the control function 204. If multiple computing functions are provided, the control function may then select one to continue the service request.
5. Not applicable in this option.
6. The same as step 6 of mechanism option 1.
7. The same as step 7 of mechanism option 1.

A fourth option of an implementation of a mechanism for coordination between the control function and the orchestration function is shown in FIG. 7.

FIG. 7 depicts a mechanism according to option 4, in which coordination between the control function 204 and the registration and discovery function 208 occurs with support of the resource management function 302.
1. 1a and 1b are the same as steps 1a and 1b of mechanism option 2.
2. The computing function 202 may register itself, or be registered, to the registration and discovery function 208.
2a. The resource management function 302 may register the computing function 202 and report its status to the registration and discovery function 208, with any of the following information:
   - service area (e.g., geographical area) of the computing function;
   - total capacity and types of resources supported by the computing function;
   - energy efficiency level of the computing resources;
   - type of services supported by the computing function;
   - usage, and/or available capacity of the computing function; and/or
   - status (e.g., alarms) of the computing resource and computing function.
2b. The same as step 2b of mechanism option 3.
3. The same as step 3 of mechanism option 3.
4. The same as step 4 of mechanism option 3.
5. Not applicable in this option.
6. The same as step 6 of mechanism option 3.
7. The same as step 7 of mechanism option 3.

### SYSTEMS AND IMPLEMENTATIONS

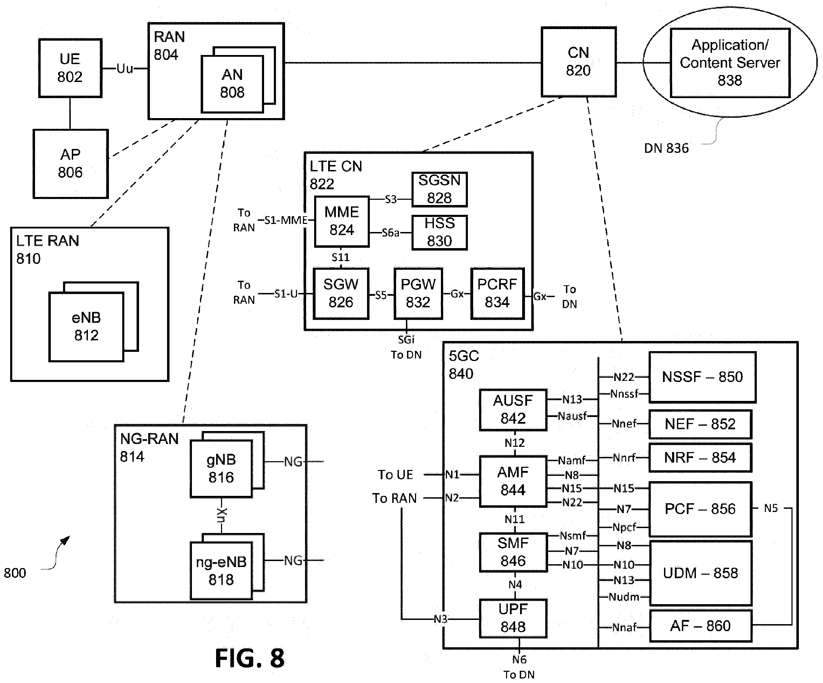

FIGs. 8-10 illustrate various systems, devices, and components that may implement aspects of disclosed embodiments.

FIG. 8 illustrates a network 800 in accordance with various embodiments. The network 800 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 800 may include a UE 802, which may include any mobile or non-mobile computing device designed to communicate with a RAN 804 via an over-the-air connection. The UE 802 may be communicatively coupled with the RAN 804 by a Uu interface. The UE 802 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 800 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 802 may additionally communicate with an AP 806 via an over-the-air connection. The AP 806 may manage a WLAN connection, which may serve to offload some/all network traffic from the RAN 804. The connection between the UE 802 and the AP 806 may be consistent with any IEEE 802.11 protocol, wherein the AP 806 could be a wireless fidelity (Wi-Fi^{®}) router. In some embodiments, the UE 802, RAN 804, and AP 806 may utilize cellular-WLAN aggregation (for example, LWA/LWIP). Cellular-WLAN aggregation may involve the UE 802 being configured by the RAN 804 to utilize both cellular radio resources and WLAN resources.

The RAN 804 may include one or more access nodes, for example, AN 808. AN 808 may terminate air-interface protocols for the LTE 802 by providing access stratum protocols including RRC, PDCP, RLC, MAC, and L1 protocols. In this manner, the AN 808 may enable data/voice connectivity between CN 820 and the UE 802. In some embodiments, the AN 808 may be implemented in a discrete device or as one or more software entities running on server computers as part of, for example, a virtual network, which may be referred to as a CRAN or virtual baseband unit pool. The AN 808 be referred to as a BS, gNB, RAN node, eNB, ng-eNB, NodeB, RSU, TRxP, TRP, etc. The AN 808 may be a macrocell base station or a low power base station for providing femtocells, picocells or other like cells having smaller coverage areas, smaller user capacity, or higher bandwidth compared to macrocells.

In embodiments in which the RAN 804 includes a plurality of ANs, they may be coupled with one another via an X2 interface (if the RAN 804 is an LTE RAN) or an Xn interface (if the RAN 804 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 804 may each manage one or more cells, cell groups, component carriers, etc. to provide the UE 802 with an air interface for network access. The UE 802 may be simultaneously connected with a plurality of cells provided by the same or different ANs of the RAN 804. For example, the UE 802 and RAN 804 may use carrier aggregation to allow the UE 802 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 804 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the LTE 802 or AN 808 may be or act as an RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 804 may be an LTE RAN 810 with eNBs, for example, eNB 812. The LTE RAN 810 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operate on sub-6 GHz bands.

In some embodiments, the RAN 804 may be an NG-RAN 814 with gNBs, for example, gNB 816, or ng-eNBs, for example, ng-eNB 818. The gNB 816 may connect with SG-enabled UEs using a 5G NR interface. The gNB 816 may connect with a 5G core through an NG interface, which may include an N2 interface or an N3 interface. The ng-eNB 818 may also connect with the 5G core through an NG interface, but may connect with a UE via an LTE air interface. The gNB 816 and the ng-eNB 818 may connect with each other over an Xn interface.

In some embodiments, the NG interface may be split into two parts, an NG user plane (NG-U) interface, which carries traffic data between the nodes of the NG-RAN 814 and a UPF 848 (e.g., N3 interface), and an NG control plane (NG-C) interface, which is a signaling interface between the nodes of the NG-RAN814 and an AMF 844 (e.g., N2 interface).

The NG-RAN 814 may provide a 5G-NR air interface with the following characteristics: variable SCS; CP-OFDM for DL, CP-OFDM and DFT-s-OFDM for LTL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operate on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 802 can be configured with multiple BWPs where each BWP configuration has a different SCS. When a BWP change is indicated to the UE 802, the SCS of the transmission is changed as well. Another use case example of BWP is related to power saving. In particular, multiple BWPs can be configured for the LTE 802 with different amount of frequency resources (for example, PRBs) to support data transmission under different traffic loading scenarios. A BWP containing a smaller number of PRBs can be used for data transmission with small traffic load while allowing power saving at the LTE 802 and in some cases at the gNB 816. A BWP containing a larger number of PRBs can be used for scenarios with higher traffic load.

The RAN 804 is communicatively coupled to CN 820 that includes network elements to provide various functions to support data and telecommunications services to customers/subscribers (for example, users of UE 802). The components of the CN 820 may be implemented in one physical node or separate physical nodes. In some embodiments, NFV may be utilized to virtualize any or all of the functions provided by the network elements of the CN 820 onto physical compute/storage resources in servers, switches, etc. A logical instantiation of the CN 820 may be referred to as a network slice, and a logical instantiation of a portion of the CN 820 may be referred to as a network sub-slice.

In some embodiments, the CN 820 may be an LTE CN 822, which may also be referred to as an EPC. The LTE CN 822 may include MME 824, SGW 826, SGSN 828, HSS 830, PGW 832, and PCRF 834 coupled with one another over interfaces (or "reference points") as shown. Functions of the elements of the LTE CN 822 may be briefly introduced as follows.

The MME 824 may implement mobility management functions to track a current location of the LTE 802 to facilitate paging, bearer activation/deactivation, handovers, gateway selection, authentication, etc.

The SGW 826 may terminate an S 1 interface toward the RAN and route data packets between the RAN and the LTE CN 822. The SGW 826 may be a local mobility anchor point for inter-RAN node handovers and also may provide an anchor for inter-3GPP mobility. Other responsibilities may include lawful intercept, charging, and some policy enforcement.

The SGSN 828 may track a location of the LTE 802 and perform security functions and access control. In addition, the SGSN 828 may perform inter-EPC node signaling for mobility between different RAT networks; PDN and S-GW selection as specified by MME 824; MME selection for handovers; etc. The S3 reference point between the MME 824 and the SGSN 828 may enable user and bearer information exchange for inter-3GPP access network mobility in idle/active states.

The HSS 830 may include a database for network users, including subscription-related information to support the network entities' handling of communication sessions. The HSS 830 can provide support for routing/roaming, authentication, authorization, naming/addressing resolution, location dependencies, etc. An S6a reference point between the HSS 830 and the MME 824 may enable transfer of subscription and authentication data for authenticating/authorizing user access to the LTE CN 820.

The PGW 832 may terminate an SGi interface toward a data network (DN) 836 that may include an application/content server 838. The PGW 832 may route data packets between the LTE CN 822 and the data network 836. The PGW 832 may be coupled with the SGW 826 by an S5 reference point to facilitate user plane tunneling and tunnel management. The PGW 832 may further include a node for policy enforcement and charging data collection (for example, PCEF). Additionally, the SGi reference point between the PGW 832 and the data network 8 36 may be an operator external public, a private PDN, or an intra-operator packet data network, for example, for provision of IMS services. The PGW 832 may be coupled with a PCRF 834 via a Gx reference point.

The PCRF 834 is the policy and charging control element of the LTE CN 822. The PCRF 834 may be communicatively coupled to the app/content server 838 to determine appropriate QoS and charging parameters for service flows. The PCRF 832 may provision associated rules into a PCEF (via Gx reference point) with appropriate TFT and QCI.

In some embodiments, the CN 820 may be a 5GC 840. The 5GC 840 may include an AUSF 842, AMF 844, SMF 846, UPF 848, NSSF 850, NEF 852, NRF 854, PCF 856, UDM 858, and AF 860 coupled with one another over interfaces (or "reference points") as shown. Functions of the elements of the 5GC 840 may be briefly introduced as follows.

The AUSF 842 may store data for authentication of LTE 802 and handle authentication-related functionality. The AUSF 842 may facilitate a common authentication framework for various access types. In addition to communicating with other elements of the 5GC 840 over reference points as shown, the AUSF 842 may exhibit an Nausf service-based interface.

The AMF 844 may allow other functions of the 5GC 840 to communicate with the UE 802 and the RAN 804 and to subscribe to notifications about mobility events with respect to the UE 802. The AMF 844 may be responsible for registration management (for example, for registering UE 802), connection management, reachability management, mobility management, lawful interception of AMF-related events, and access authentication and authorization. The AMF 844 may provide transport for SM messages between the UE 802 and the SMF 846, and act as a transparent proxy for routing SM messages. AMF 844 may also provide transport for SMS messages between UE 802 and an SMSF. AMF 844 may interact with the AUSF 842 and the UE 802 to perform various security anchor and context management functions. Furthermore, AMF 844 may be a termination point of a RAN CP interface, which may include or be an N2 reference point between the RAN 804 and the AMF 844; and the AMF 844 may be a termination point of NAS (N1) signaling, and perform NAS ciphering and integrity protection. AMF 844 may also support NAS signaling with the UE 802 over an N3 IWF interface.

The SMF 846 may be responsible for SM (for example, session establishment, tunnel management between UPF 848 and AN 808); UE IP address allocation and management (including optional authorization); selection and control of UP function; configuring traffic steering at UPF 848 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 844 over N2 to AN 808; and determining SSC mode of a session. SM may refer to management of a PDU session, and a PDU session or "session" may refer to a PDU connectivity service that provides or enables the exchange of PDUs between the LTE 802 and the data network 836.

The UPF 848 may act as an anchor point for intra-RAT and inter-RAT mobility, an external PDU session point of interconnect to data network 836, and a branching point to support multi-homed PDU session. The UPF 848 may also perform packet routing and forwarding, perform packet inspection, enforce the user plane part of policy rules, lawfully intercept packets (UP collection), perform traffic usage reporting, perform QoS handling for a user plane (e.g., packet filtering, gating, LTL/DL rate enforcement), perform uplink traffic verification (e.g., SDF-to-QoS flow mapping), transport level packet marking in the uplink and downlink, and perform downlink packet buffering and downlink data notification triggering. UPF 848 may include an uplink classifier to support routing traffic flows to a data network.

The NSSF 850 may select a set of network slice instances serving the UE 802. The NSSF 850 may also determine allowed NSSAI and the mapping to the subscribed S-NSSAIs, if needed. The NSSF 850 may also determine the AMF set to be used to serve the LTE 802, or a list of candidate AMFs based on a suitable configuration and possibly by querying the NRF 854. The selection of a set of network slice instances for the UE 802 may be triggered by the AMF 844 with which the LTE 802 is registered by interacting with the NSSF 850, which may lead to a change of AMF. The NSSF 850 may interact with the AMF 844 via an N22 reference point; and may communicate with another NSSF in a visited network via an N31 reference point (not shown). Additionally, the NSSF 850 may exhibit an Nnssf service-based interface.

The NEF 852 may securely expose services and capabilities provided by 3GPP network functions for third party, internal exposure/re-exposure, AFs (e.g., AF 860), edge computing or fog computing systems, etc. In such embodiments, the NEF 852 may authenticate, authorize, or throttle the AFs. NEF 852 may also translate information exchanged with the AF 860 and information exchanged with internal network functions. For example, the NEF 852 may translate between an AF-Service-Identifier and an internal 5GC information. NEF 852 may also receive information from other NFs based on exposed capabilities of other NFs. This information may be stored at the NEF 852 as structured data, or at a data storage NF using standardized interfaces. The stored information can then be re-exposed by the NEF 852 to other NFs and AFs, or used for other purposes such as analytics. Additionally, the NEF 852 may exhibit an Nnef service-based interface.

The NRF 854 may support service discovery functions, receive NF discovery requests from NF instances, and provide the information of the discovered NF instances to the NF instances. NRF 854 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 854 may exhibit the Nnrf service-based interface.

The PCF 856 may provide policy rules to control plane functions to enforce them, and may also support unified policy framework to govern network behavior. The PCF 856 may also implement a front end to access subscription information relevant for policy decisions in a UDR of the UDM 858. In addition to communicating with functions over reference points as shown, the PCF 856 exhibit an Npcf service-based interface.

The UDM 858 may handle subscription-related information to support the network entities' handling of communication sessions, and may store subscription data of UE 802. For example, subscription data may be communicated via an N8 reference point between the UDM 858 and the AMF 844. The UDM 858 may include two parts, an application front end and a UDR. The UDR may store subscription data and policy data for the UDM 858 and the PCF 856, and/or structured data for exposure and application data (including PFDs for application detection, application request information for multiple UEs 802) for the NEF 852. The Nudr service-based interface may be exhibited by the UDR 221 to allow the UDM 858, PCF 856, and NEF 852 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 858 may exhibit the Nudm service-based interface.

The AF 860 may provide application influence on traffic routing, provide access to NEF, and interact with the policy framework for policy control.

In some embodiments, the 5GC 840 may enable edge computing by selecting operator/3^{rd} party services to be geographically close to a point that the LTE 802 is attached to the network. This may reduce latency and load on the network. To provide edge-computing implementations, the 5GC 840 may select a UPF 848 close to the UE 802 and execute traffic steering from the UPF 848 to data network 836 via the N6 interface. This may be based on the LTE subscription data, LTE location, and information provided by the AF 860. In this way, the AF 860 may influence UPF (re)selection and traffic routing. Based on operator deployment, when AF 860 is considered to be a trusted entity, the network operator may permit AF 860 to interact directly with relevant NFs. Additionally, the AF 860 may exhibit an Naf service-based interface.

The data network 836 may represent various network operator services, Internet access, or third party services that may be provided by one or more servers including, for example, application/content server 838.

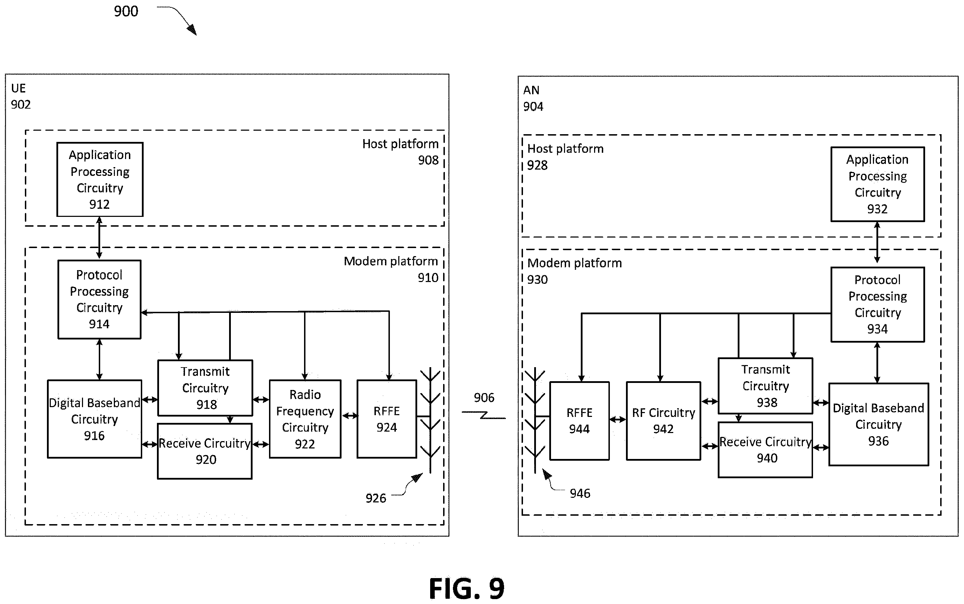

FIG. 9 schematically illustrates a wireless network 900 in accordance with various embodiments. The wireless network 900 may include a LTE 902 in wireless communication with an AN 904. The UE 902 and AN 904 may be similar to, and substantially interchangeable with, like-named components described elsewhere herein.

The UE 902 may be communicatively coupled with the AN 904 via connection 906. The connection 906 is illustrated as an air interface to enable communicative coupling, and can be consistent with cellular communications protocols such as an LTE protocol or a 5G NR protocol operating at mmWave or sub-6GHz frequencies.

The UE 902 may include a host platform 908 coupled with a modem platform 910. The host platform 908 may include application processing circuitry 912, which may be coupled with protocol processing circuitry 914 of the modem platform 910. The application processing circuitry 912 may run various applications for the LTE 902 that source/sink application data. The application processing circuitry 912 may further implement one or more layer operations to transmit/receive application data to/from a data network. These layer operations may include transport (for example UDP) and Internet (for example, IP) operations

The protocol processing circuitry 914 may implement one or more of layer operations to facilitate transmission or reception of data over the connection 906. The layer operations implemented by the protocol processing circuitry 914 may include, for example, MAC, RLC, PDCP, RRC and NAS operations.

The modem platform 910 may further include digital baseband circuitry 916 that may implement one or more layer operations that are "below" layer operations performed by the protocol processing circuitry 914 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 910 may further include transmit circuitry 918, receive circuitry 920, RF circuitry 922, and RF front end (RFFE) 924, which may include or connect to one or more antenna panels 926. Briefly, the transmit circuitry 918 may include a digital-to-analog converter, mixer, intermediate frequency (IF) components, etc.; the receive circuitry 920 may include an analog-to-digital converter, mixer, IF components, etc.; the RF circuitry 922 may include a low-noise amplifier, a power amplifier, power tracking components, etc.; RFFE 924 may include filters (for example, surface/bulk acoustic wave filters), switches, antenna tuners, beamforming components (for example, phase-array antenna components), etc. The selection and arrangement of the components of the transmit circuitry 918, receive circuitry 920, RF circuitry 922, RFFE 924, and antenna panels 926 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 914 may include one or more instances of control circuitry (not shown) to provide control functions for the transmit/receive components.

A UE reception may be established by and via the antenna panels 926, RFFE 924, RF circuitry 922, receive circuitry 920, digital baseband circuitry 916, and protocol processing circuitry 914. In some embodiments, the antenna panels 926 may receive a transmission from the AN 904 by receive-beamforming signals received by a plurality of antennas/antenna elements of the one or more antenna panels 926.

A UE transmission may be established by and via the protocol processing circuitry 914, digital baseband circuitry 916, transmit circuitry 918, RF circuitry 922, RFFE 924, and antenna panels 926. In some embodiments, the transmit components of the UE 904 may apply a spatial filter to the data to be transmitted to form a transmit beam emitted by the antenna elements of the antenna panels 926.

Similar to the UE 902, the AN 904 may include a host platform 928 coupled with a modem platform 930. The host platform 928 may include application processing circuitry 932 coupled with protocol processing circuitry 934 of the modem platform 930. The modem platform may further include digital baseband circuitry 936, transmit circuitry 938, receive circuitry 940, RF circuitry 942, RFFE circuitry 944, and antenna panels 946. The components of the AN 904 may be similar to and substantially interchangeable with like-named components of the UE 902. In addition to performing data transmission/reception as described above, the components of the AN 908 may perform various logical functions that include, for example, RNC functions such as radio bearer management, uplink and downlink dynamic radio resource management, and data packet scheduling.

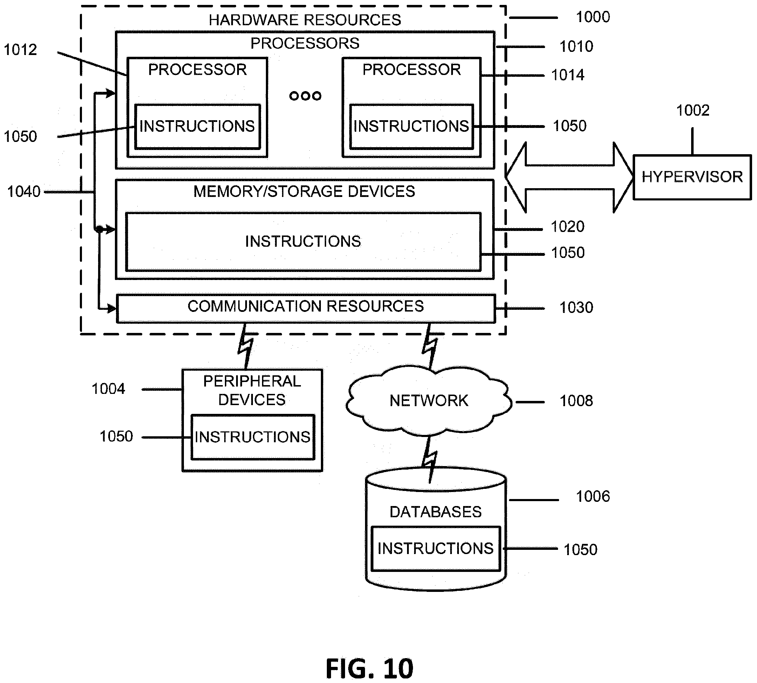

FIG. 10 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 10 shows a diagrammatic representation of hardware resources 1000 including one or more processors (or processor cores) 1010, one or more memory/storage devices 1020, and one or more communication resources 1030, each of which may be communicatively coupled via a bus 1040 or other interface circuitry. For embodiments where node virtualization (e.g., NFV) is utilized, a hypervisor 1002 may be executed to provide an execution environment for one or more network slices/sub-slices to utilize the hardware resources 1000.

The processors 1010 may include, for example, a processor 1012 and a processor 1014. The processors 1010 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1020 may include main memory, disk storage, or any suitable combination thereof. The memory/storage devices 1020 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1030 may include interconnection or network interface controllers, components, or other suitable devices to communicate with one or more peripheral devices 1004 or one or more databases 1006 or other network elements via a network 1008. For example, the communication resources 1030 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 1050 may include software, a program, an application, an applet, an app, or other executable code for causing at least any of the processors 1010 to perform any one or more of the methodologies discussed herein. The instructions 1050 may reside, completely or partially, within at least one of the processors 1010 (e.g., within the processor's cache memory), the memory/storage devices 1020, or any suitable combination thereof. Furthermore, any portion of the instructions 1050 may be transferred to the hardware resources 1000 from any combination of the peripheral devices 1004 or the databases 1006. Accordingly, the memory of processors 1010, the memory/storage devices 1020, the peripheral devices 1004, and the databases 1006 are examples of computer-readable and machine-readable media.

### EXAMPLE PROCEDURES

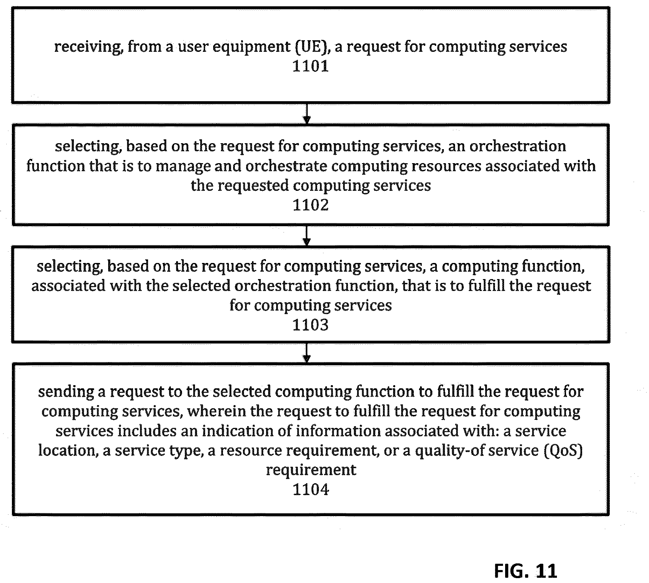

In some embodiments, the electronic device(s), network(s), system(s), chip(s) or component(s), or portions or implementations thereof, of FIGs. 8-10, or some other figure herein, may be configured to perform one or more processes, techniques, or methods as described herein, or portions thereof. One such process is depicted in FIG. 11. For example, the process may include, at 1101, receiving, from a user equipment (UE), a request for computing services. The process further includes, at 1102, selecting, based on the request for computing services, an orchestration function that is to manage and orchestrate computing resources associated with the requested computing services. The process further includes, at 1103, selecting, based on the request for computing services, a computing function, associated with the selected orchestration function, that is to fulfill the request for computing services. The process further includes, at 1104, sending a request to the selected computing function to fulfill the request for computing services, wherein the request to fulfill the request for computing services includes an indication of information associated with: a service location, a service type, a resource requirement, or a quality-of service (QoS) requirement.

For one or more embodiments, at least one of the components set forth in one or more of the preceding FIGs. may be configured to perform one or more operations, techniques, processes, and/or methods as set forth in the example section below. For example, the baseband circuitry as described above in connection with one or more of the preceding FIGs. may be configured to operate in accordance with one or more of the examples set forth below. For another example, circuitry associated with a LTE, base station, network element, etc. as described above in connection with one or more of the preceding FIGs. may be configured to operate in accordance with one or more of the examples set forth below in the example section.

### EXAMPLES

Example 1 may include an apparatus configured to operate for resource orchestration in a next generation system, the apparatus may include processing circuitry configured to: receive, from one or more first entities, first information about the computing resources for one or more computing function(s); receive, from a second entity, a request to provide available computing function(s) for supporting the computing service(s); select the suitable computing function(s) based on the received first information for the request; and provide the selected computing function(s), in a response, to the second entity.

Example 2 may include the apparatus of example 1, or some other example herein, wherein the first entity is a computing function.

Example 3 may include the apparatus of example 1 or 2, or some other example herein, wherein the first entity is a resource management function.

Example 4 may include the apparatus of any one of examples 1 to 3, or some other example herein, further including processing circuitry configured to: send a request to a registration and discovery function, register the orchestration function; and receive a response indicating a registration result from registration and discovery function.

Example 5 may include an apparatus configured to operate for resource management in the next generation system, the apparatus including processing circuitry configured to: receive, from one or more computing function(s), the first information about the computing resources for the computing function(s); and send, to a third entity, the first information about the computing resources for the computing function(s).

Example 6 may include the apparatus of example 5, or some other example herein, wherein the third entity is the orchestration function.

Example 7 may include the apparatus of example 5 or 6, or some other example herein, wherein the third entity is the registration and discovery function.

Example 8 may include an apparatus configured to operate for session or service request control in a next generation system, the apparatus including processing circuitry configured to: receive, from a LTE, a request for using the computing service; select the computing function to serve the UE; send a request to the selected computing function to fulfill the service request for the LTE; and receive a response indicating the service request result from the computing function.

Example 9 may include the apparatus of example 8, or some other example herein, further including processing circuitry configured to: send, to a fourth entity, a request for requiring the suitable computing functions; and receive a response indicating the suitable computing functions from the fourth entity.

Example 10 may include the apparatus of example 9, or some other example herein, wherein the fourth entity is an orchestration function.

Example 11 may include the apparatus of example 9 or 10, or some other example herein, wherein the fourth entity is a registration and discovery function.

Example 12 may include the apparatus of any one of examples 8 to 11, or some other example herein, further including processing circuitry configured to: send, to a registration and discovery function, a request for inquiring the suitable orchestration functions; and to receive a response indicating the suitable orchestration functions from the registration and discovery function.

Example 13 may include an apparatus configured to operate for function or service registration and discovery in a next generation system, the apparatus including processing circuitry configured to: receive, from a fifth entity, a request to register services for function; register the services for the function; and send a response to the fifth entity of a result of the registration.

Example 14 may include the apparatus of example 13, or some other example herein, wherein the fifth entity is an orchestration function or a resource management function.

Example 15 may include the apparatus of example 13 or 14, or some other example herein, further including processing circuitry configured to: receive, from a sixth entity, a request to inquire a function for the computing services; retrieve the available functions per the request; and send a response to the available functions to the sixth entity.

Example 16 may include the apparatus of example 15, or some other example herein, wherein the sixth entity is the control function.

Example 17 may include the apparatus of example 15 or 16, or some other example herein, wherein the function for the computing services is an orchestration function or a computing function.

Example 18 may include the apparatus of any one of examples 1 to 7, or some other example herein, wherein the first information includes any of the following:
- total capacity and type of resources provided by the computing function;
- usage, and/or available capacity of the computing function;
- status (e.g., alarms) of the computing resource and computing function;
- energy efficiency level of the computing resources;
- types of services supported by the computing function; and/or
- location of the computing resources (or computing function).

Example 19 may include the apparatus of any one of examples 1 to 7, or some other example herein, wherein the request for registering the orchestration function includes at least of the following:
- service area (e.g., geographical area) of the orchestration function;
- types of services supported by each computing function orchestrated by the orchestration function.
- total capacity and types of resources provided by the computing function;
- usage, and/or available capacity of the computing function;
- status (e.g., alarms) of the computing resource and computing function;
- energy efficiency level of the computing resources;
- location of the computing resources (or computing function); and/or
- affinity and/or anti-affinity relation between computing functions.

Example 20 may include the apparatus of any one of examples 8 to 11, or some other example herein, wherein the request for requiring the suitable computing functions includes at least one of the following:
- service location,
- service type,
- resource requirements; or
- QoS requirements.

Example 21 includes a method of a control function, including: receiving, from a user equipment (UE), a request for computing services; selecting, based on the request for computing services, an orchestration function that is to manage and orchestrate computing resources associated with the requested computing services; selecting, based on the request for computing services, a computing function, associated with the selected orchestration function, that is to fulfill the request for computing services; and sending a request to the selected computing function to fulfill the request for computing services, wherein the request to fulfill the request for computing services includes an indication of information associated with: a service location, a service type, a resource requirement, and/or a quality-of service (QoS) requirement.

Example 22 includes the method of example 21, or some other example herein, wherein the method further includes receiving, from the computing function, a message indicating whether the request to fulfill the request for computing services is accepted or denied.

Example 23 includes the method of example 22, or some other example herein, wherein the message indicates the request to fulfill the request for computing services is accepted, and wherein the method further includes sending the UE information to exchange data with the computing function to fulfill the computing service.

Example 24 includes the method of example 21, or some other example herein, wherein selection of the orchestration function is based on computing function information received by the orchestration function.

Example 25 includes the method of example 24, or some other example herein, wherein the computing function information received by the orchestration function includes an indication of: a total capacity and type of resources provided by the computing function; usage or available capacity of the computing function; a status of the computing resources or the computing function; an energy efficiency level of the computing resources; a type of services supported by the computing function; and/or a location of the computing resources or computing function.

Example 26 includes the method of any one of examples 21 to 25, or some other example herein, wherein the selected orchestration function is to manage an affinity or anti-affinity relation between computing functions.

Example 27 includes the method of any one of examples 21 to 26, or some other example herein, wherein the selected orchestration function is registered with a registration and discovery function.

Example 28 includes the method of example 27, or some other example herein, wherein the registration of the selected orchestration function to the registration and discovery function is based on a service area of the selected orchestration function, a total capacity and types of resources orchestrated by the selected orchestration function, or a type of services supported by the selected computing function orchestrated by the selected orchestration function.

Example 29 includes the method of example 21, or some other example herein, wherein the request for computing services from the UE includes an indication of: a location of the UE, a type of computing service being requested, resource requirements for the requested computing services, and/or a QoS requirement for the requested computing service.

In Example 30, an apparatus of a next generation distributed cloud system for resource orchestration, comprising one or more processors, configured to: receive, from one or more computing functions, first information about computing resources for the one or more computing functions; receive, from a second entity, a request to provide one or more available computing functions for supporting one or more computing services; select one or more computing functions from the one or more available computing functions for the request, based on the received first information; and provide the selected one or more available computing functions, in a response, to the second entity.

In Example 31, the apparatus of example 30, wherein the first information received from the one or more computing functions comprises any of: total capacity and type of resources provided by each computing function; usage and/or available capacity of each computing function; status of the computing resources and computing function; energy efficiency level of the computing resources; type of computing services supported by each computing function; location of the computing resources or computing function.

In Example 32, the apparatus of any one of examples 30 or 31, wherein the second entity is a User Equipment, UE.

In Example 33, the apparatus of example 32, wherein the request to provide the one or more available computing functions for supporting one or more computing services comprises information about any of service location, service type, resource requirements, and QoS requirements.

In Example 34, the apparatus of any one of examples 30 to 33, wherein the one or more processors are further configured to: send a request to a registration and discovery function; register an orchestration function configured to provide a service or services to manage and orchestrate the computing resources and computing services; and receive a response indicating a registration result from the registration and discovery function.

In Example 35, the apparatus of example 34, wherein the one or more processors are further configured to register the orchestration function with some or all of the following information: service area of the orchestration function; total capacity and types of computing resources orchestrated by the orchestration function; and/or type of computing services supported by each computing function orchestrated by the orchestration function.

In Example 36, the apparatus of example 30 to 35, wherein a control function is configured to request the selected one or more computing functions to fulfill the service request, and preferably wherein the request from the control function comprises information about any of service location, service type, resource requirements, and/or QoS requirements.

In Example 37, the apparatus of example 36, wherein if the computing function accepts the request of the control function, the control function is configured to inform the second entity to continue the service, and wherein second entity and the computing function are configured to exchange user data to fulfill the one or more computing services.

In Example 38, the apparatus of any one of examples 30 to 37, wherein the one or more processors are further configured to send, to a third entity, the first information about the computing resources for the one or more computing functions.

In Example 39, the apparatus of example 38, wherein the one or more processors are configured to select an orchestration function from one or more orchestration functions to request the computing resources, wherein each of the orchestration functions is configured to provide a service or services to manage and orchestrate the computing resources and computing services.

In Example 40, the apparatus of example 39, wherein the second entity is a User Equipment, LTE; wherein if no suitable orchestration function is known, the control function is configured to request the registration and discovery function to provide one or more available orchestration functions that can serve a UE location and type of service requested.

In Example 41, the apparatus of example 39, wherein if no suitable computing function is known, the control function is configured to request the orchestration function to provide the one or more available computing functions that can serve a service requested by the UE.

In Example 42, the apparatus of any one of examples 30 to 41, further comprising: a resource management function; wherein the resource management function is configured to receive information regarding computing resources from the selected one or more computing functions, and to provide the information regarding computing resource to an orchestration function.

In Example 43, the apparatus of any one of examples 30 to 42, wherein the second entity is a User Equipment, LTE; and wherein the one or more processors are further configured to send, to the orchestration function, a request, to provide the available one or more orchestration functions that can serve the UE location and type of service requested.

In Example 44, a method of a control function, comprising: receiving, from a user equipment (LTE), a request for computing services; selecting, based on the request for computing services, an orchestration function that is to manage and orchestrate computing resources associated with the requested computing services; selecting, based on the request for computing services, a computing function, associated with the selected orchestration function, that is to fulfill the request for computing services; and sending a request to the selected computing function to fulfill the request for computing services; wherein the request to fulfill the request for computing services includes an indication of information associated with: a service location, a service type, a resource requirement, or a quality-of service (QoS) requirement.

Example 45 may include an apparatus including means to perform one or more elements of a method described in or related to any of examples 1-44, or any other method or process described herein.

Example 46 may include one or more non-transitory computer-readable media including instructions to cause an electronic device, upon execution of the instructions by one or more processors of the electronic device, to perform one or more elements of a method described in or related to any of examples 1-44, or any other method or process described herein.

Example 47 may include an apparatus including logic, modules, or circuitry to perform one or more elements of a method described in or related to any of examples 1-44, or any other method or process described herein.

Example 48 may include a method, technique, or process as described in or related to any of examples 1-44, or portions or parts thereof.

Example 49 may include an apparatus including: one or more processors and one or more computer-readable media including instructions that, when executed by the one or more processors, cause the one or more processors to perform the method, techniques, or process as described in or related to any of examples 1-44, or portions thereof.

Example 50 may include a signal as described in or related to any of examples 1-44, or portions or parts thereof.

Example 51 may include a datagram, packet, frame, segment, protocol data unit (PDU), or message as described in or related to any of examples 1-44, or portions or parts thereof, or otherwise described in the present disclosure.

Example 52 may include a signal encoded with data as described in or related to any of examples 1-44, or portions or parts thereof, or otherwise described in the present disclosure.

Example 53 may include a signal encoded with a datagram, packet, frame, segment, protocol data unit (PDU), or message as described in or related to any of examples 1-44, or portions or parts thereof, or otherwise described in the present disclosure.

Example 54 may include an electromagnetic signal carrying computer-readable instructions, wherein execution of the computer-readable instructions by one or more processors is to cause the one or more processors to perform the method, techniques, or process as described in or related to any of examples 1-44, or portions thereof.

Example 55 may include a computer program including instructions, wherein execution of the program by a processing element is to cause the processing element to carry out the method, techniques, or process as described in or related to any of examples 1-44, or portions thereof.

Example 56 may include a signal in a wireless network as shown and described herein.

Example 57 may include a method of communicating in a wireless network as shown and described herein.

Example 58 may include a system for providing wireless communication as shown and described herein.

Example 59 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

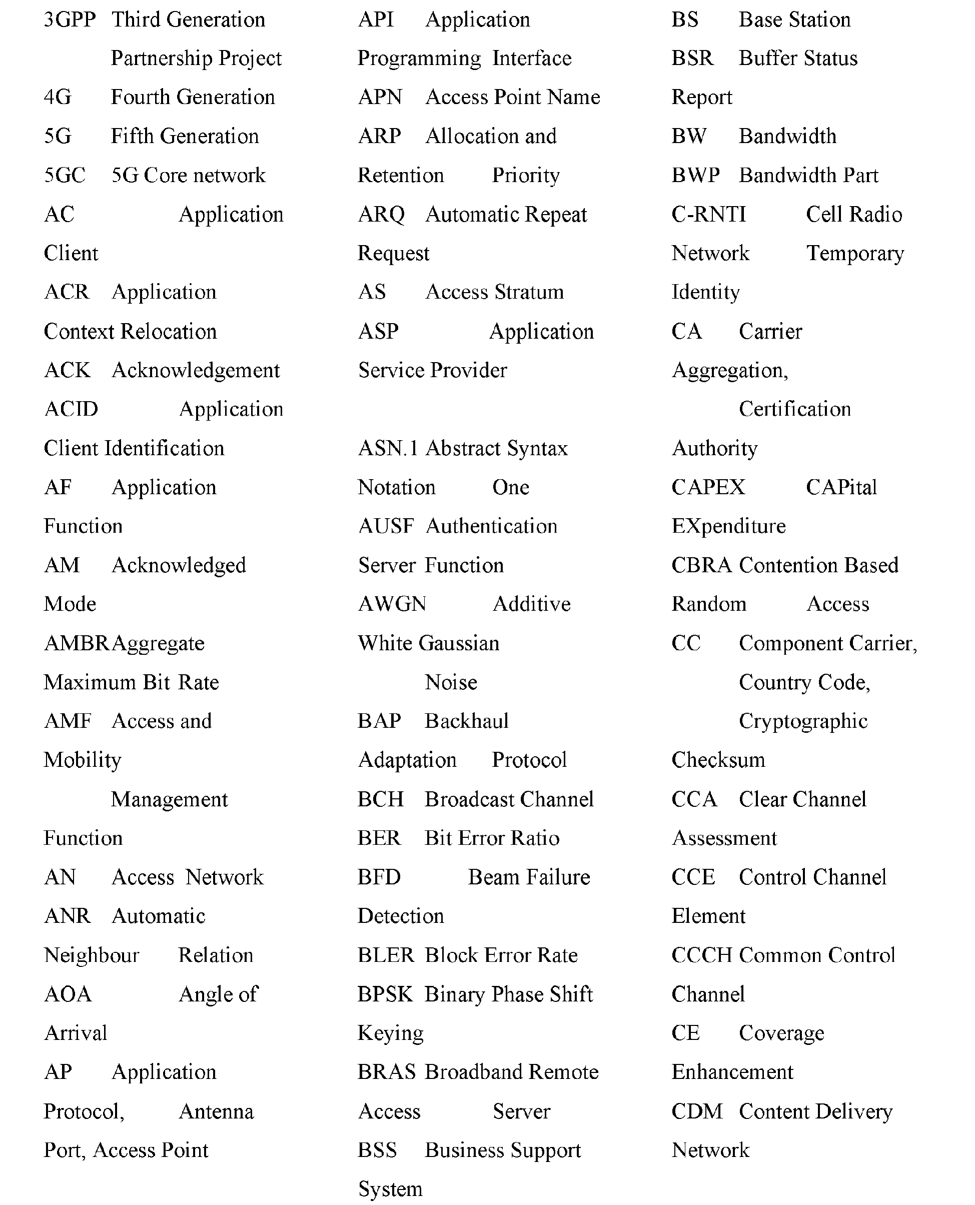

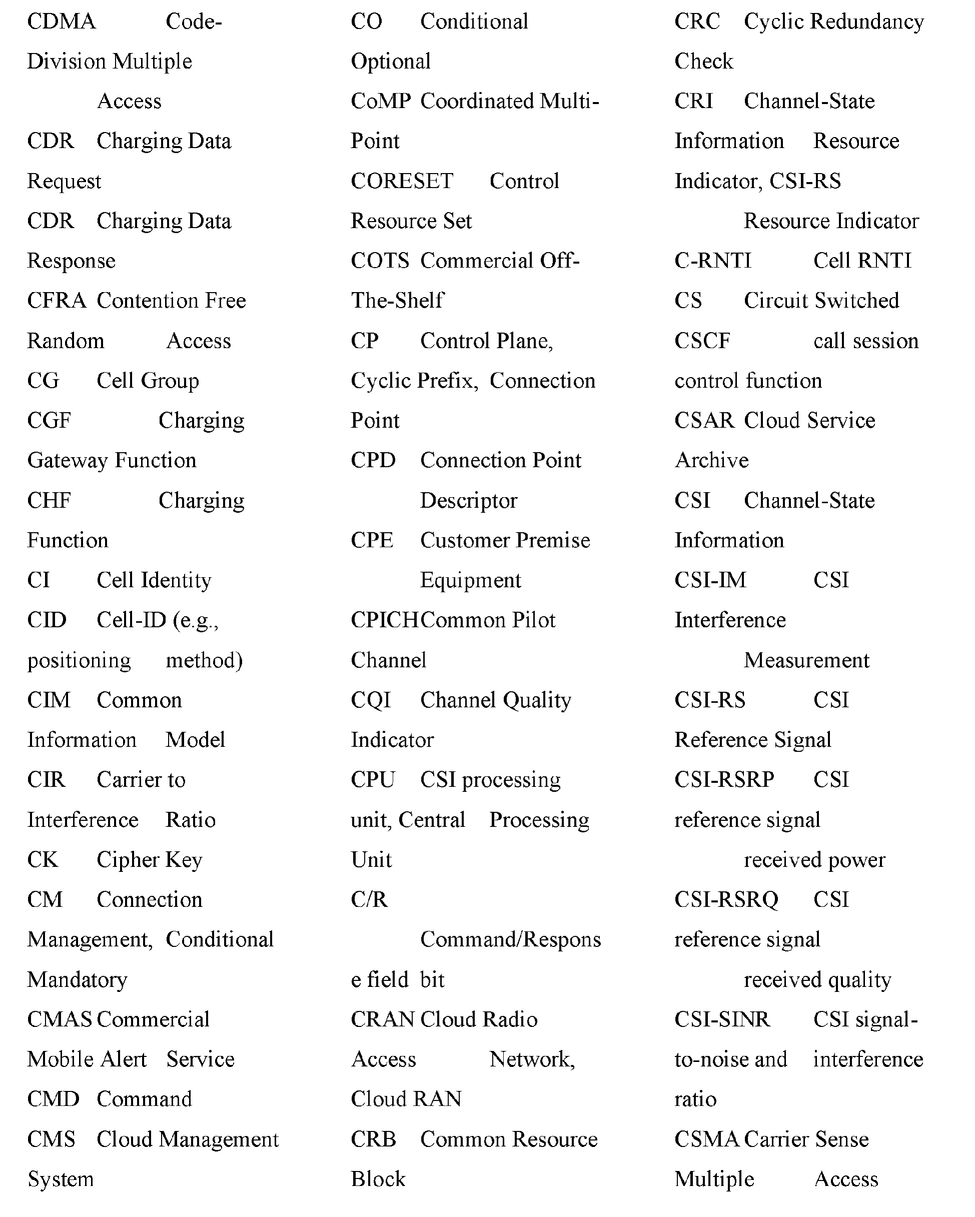

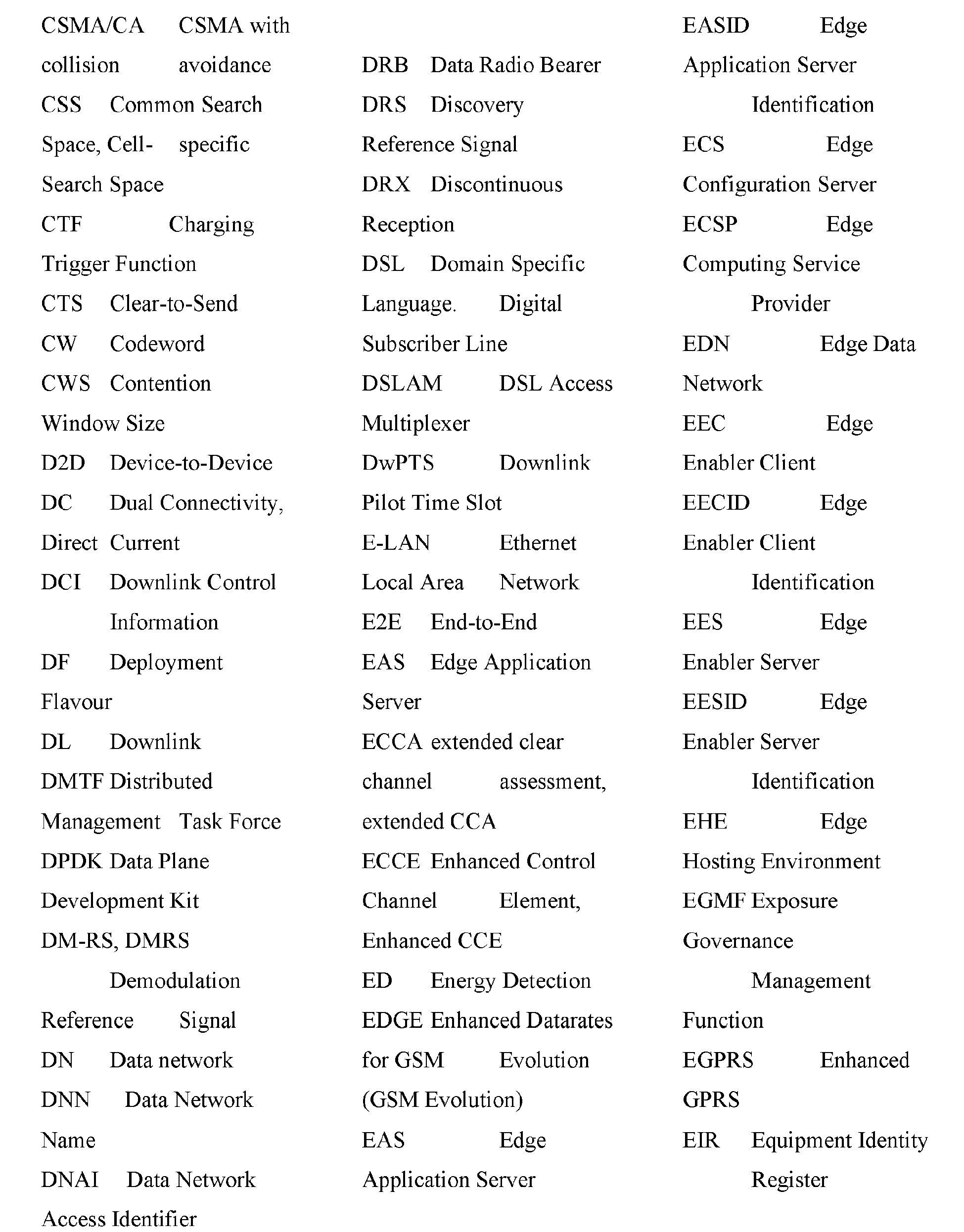

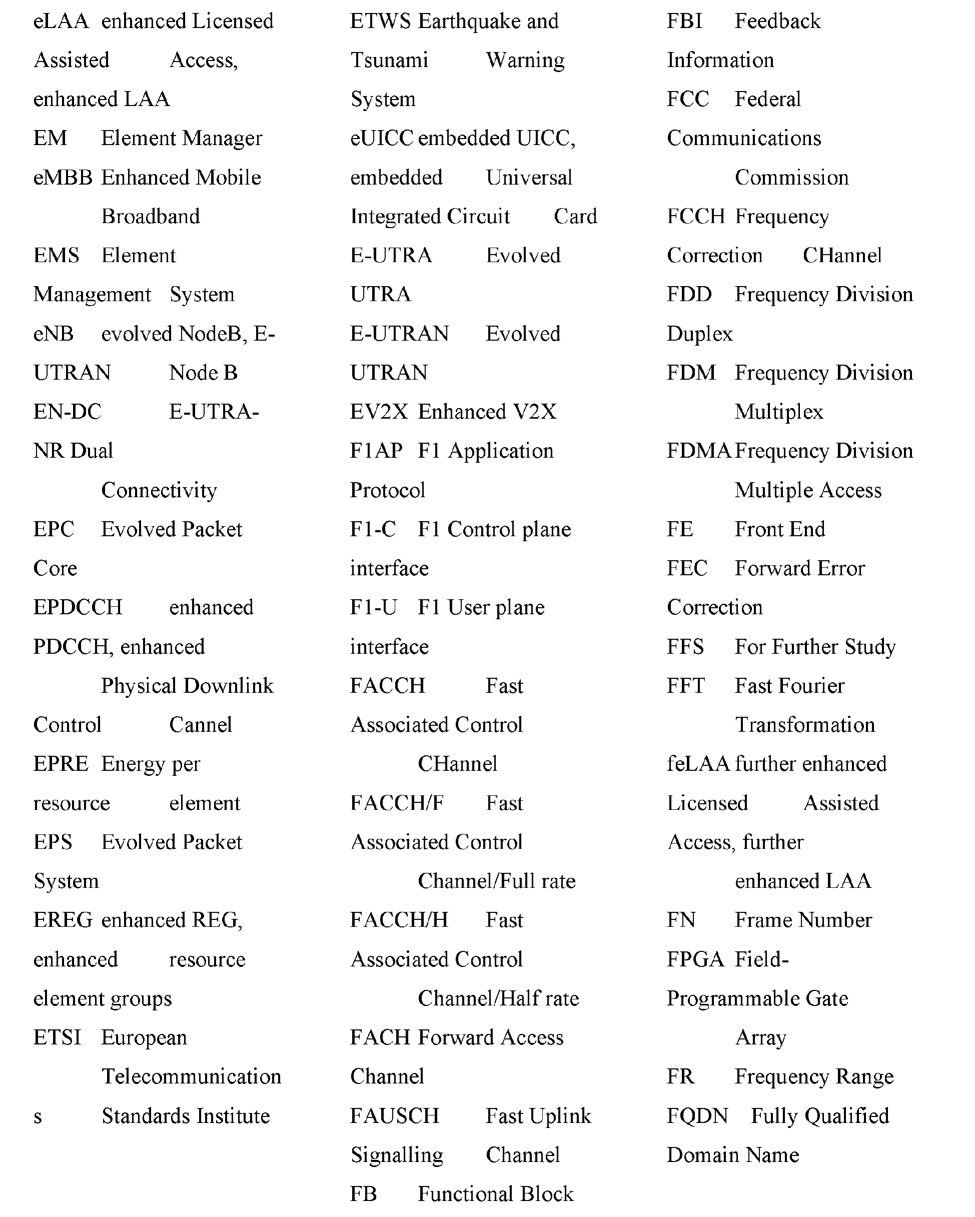

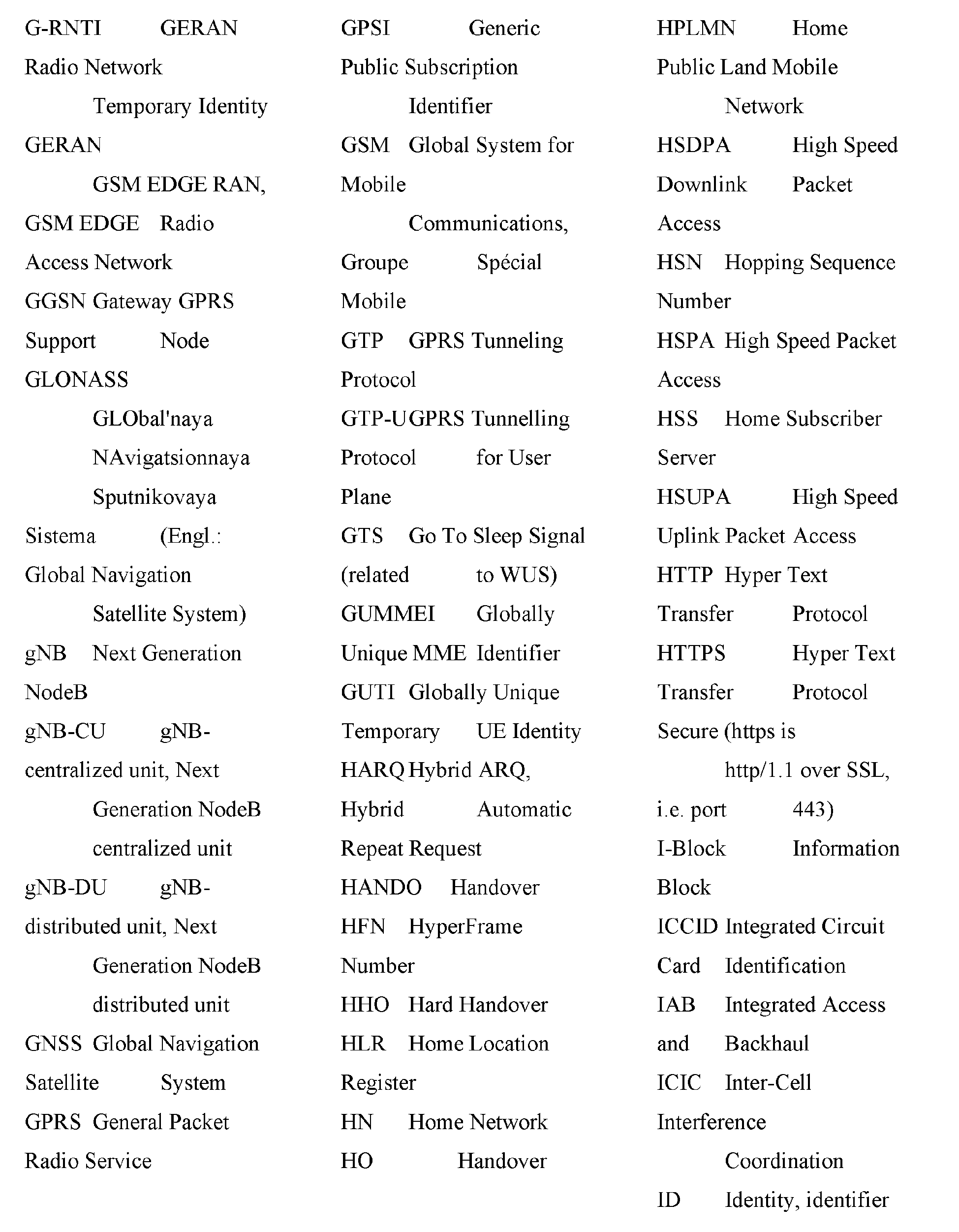

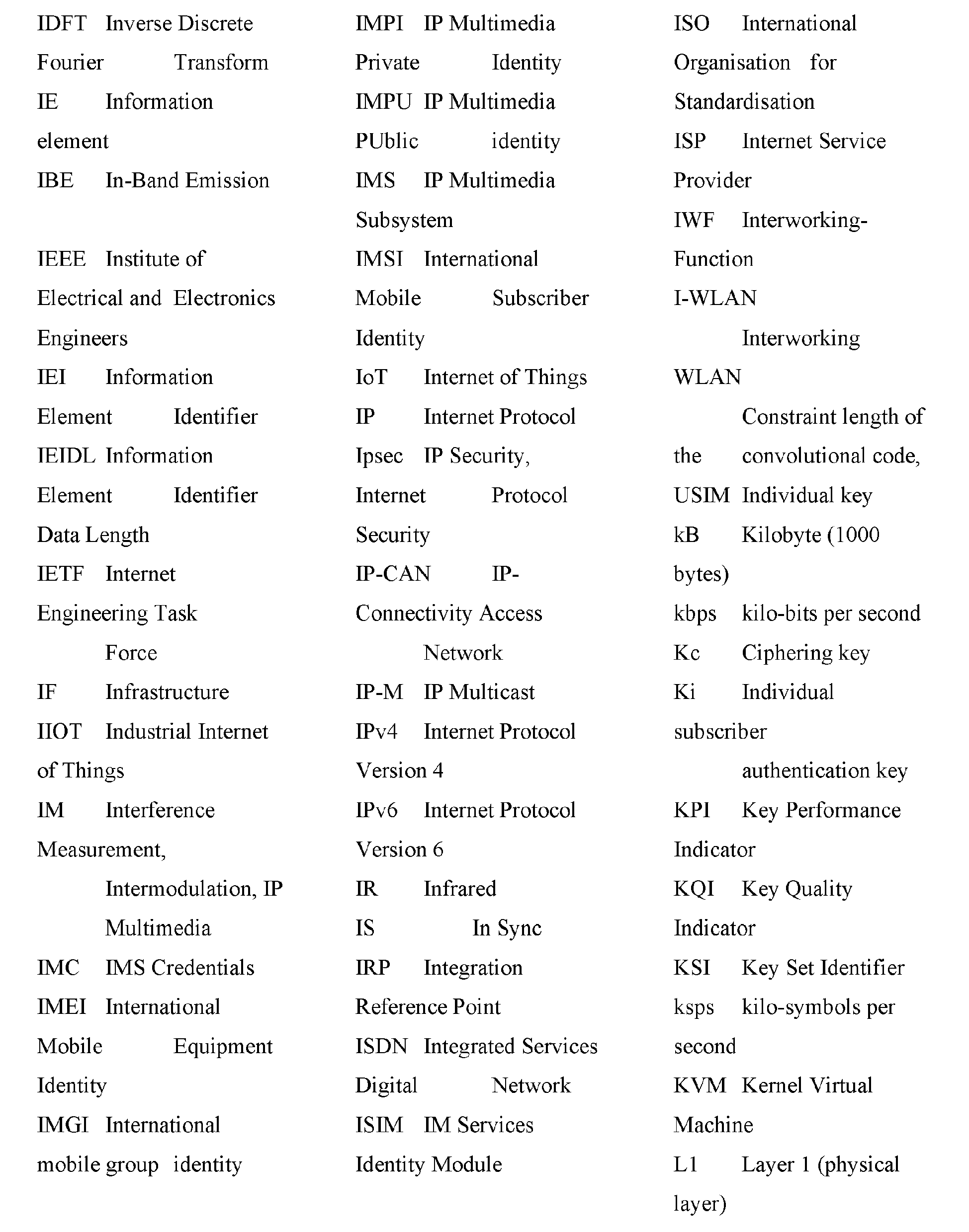

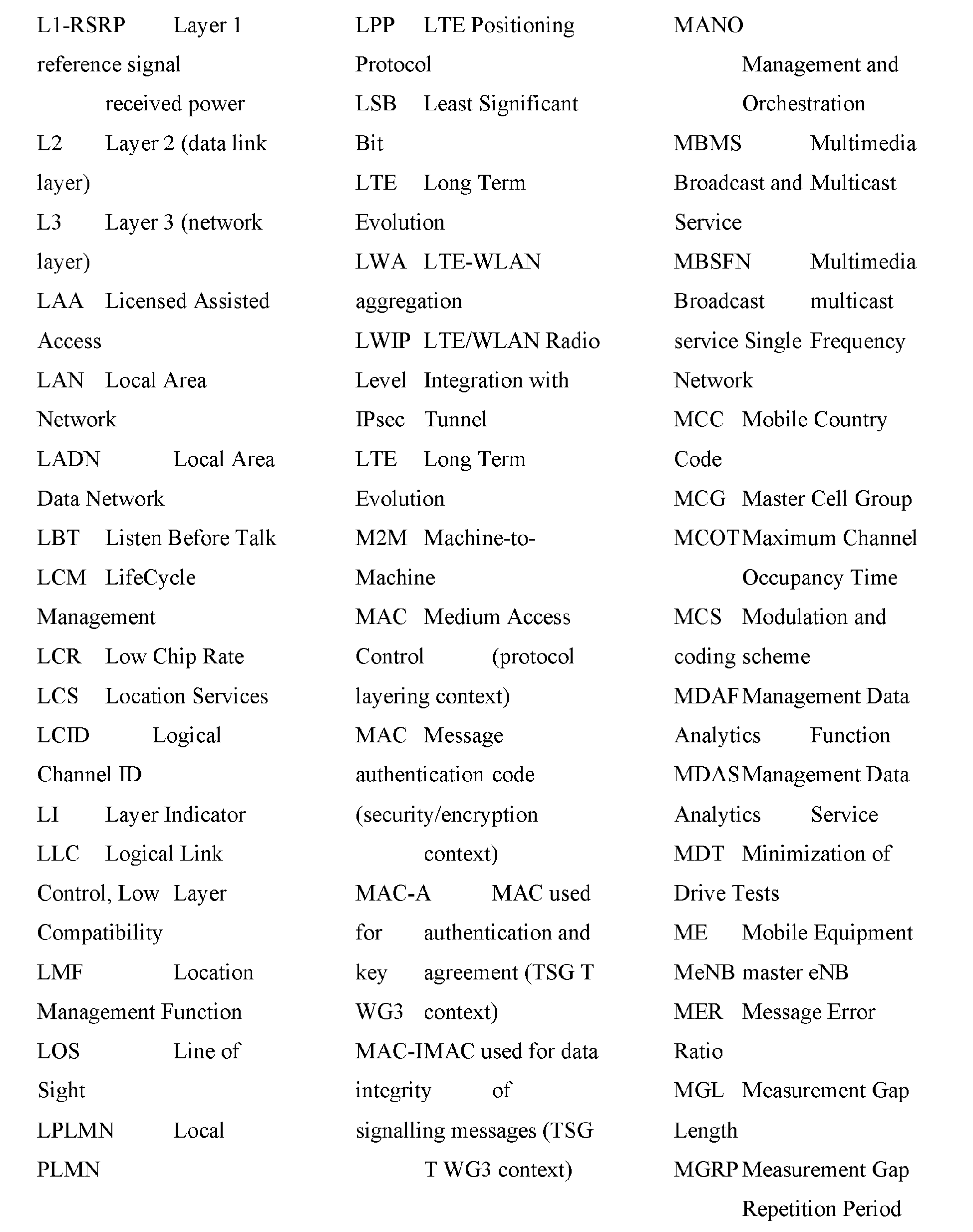

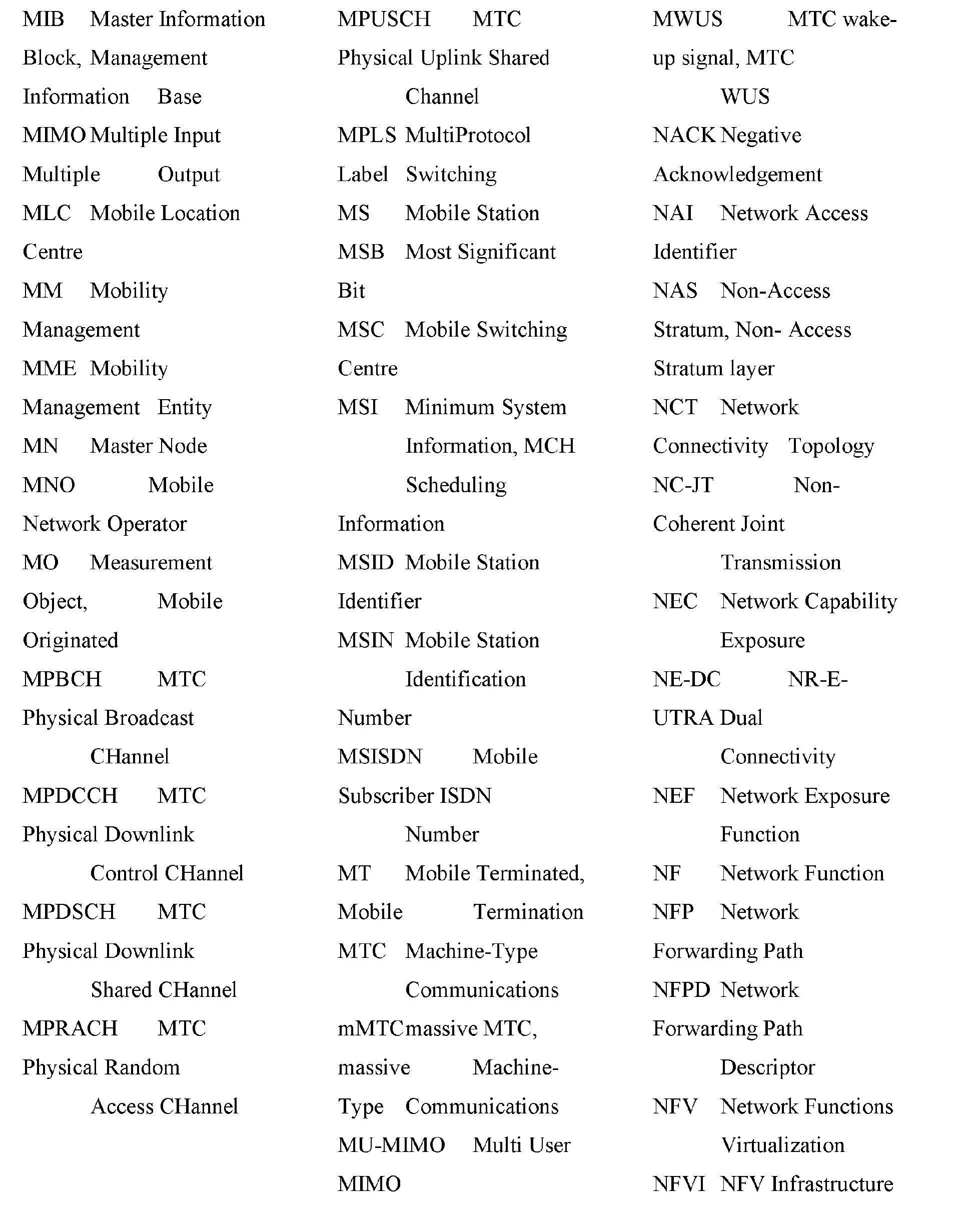

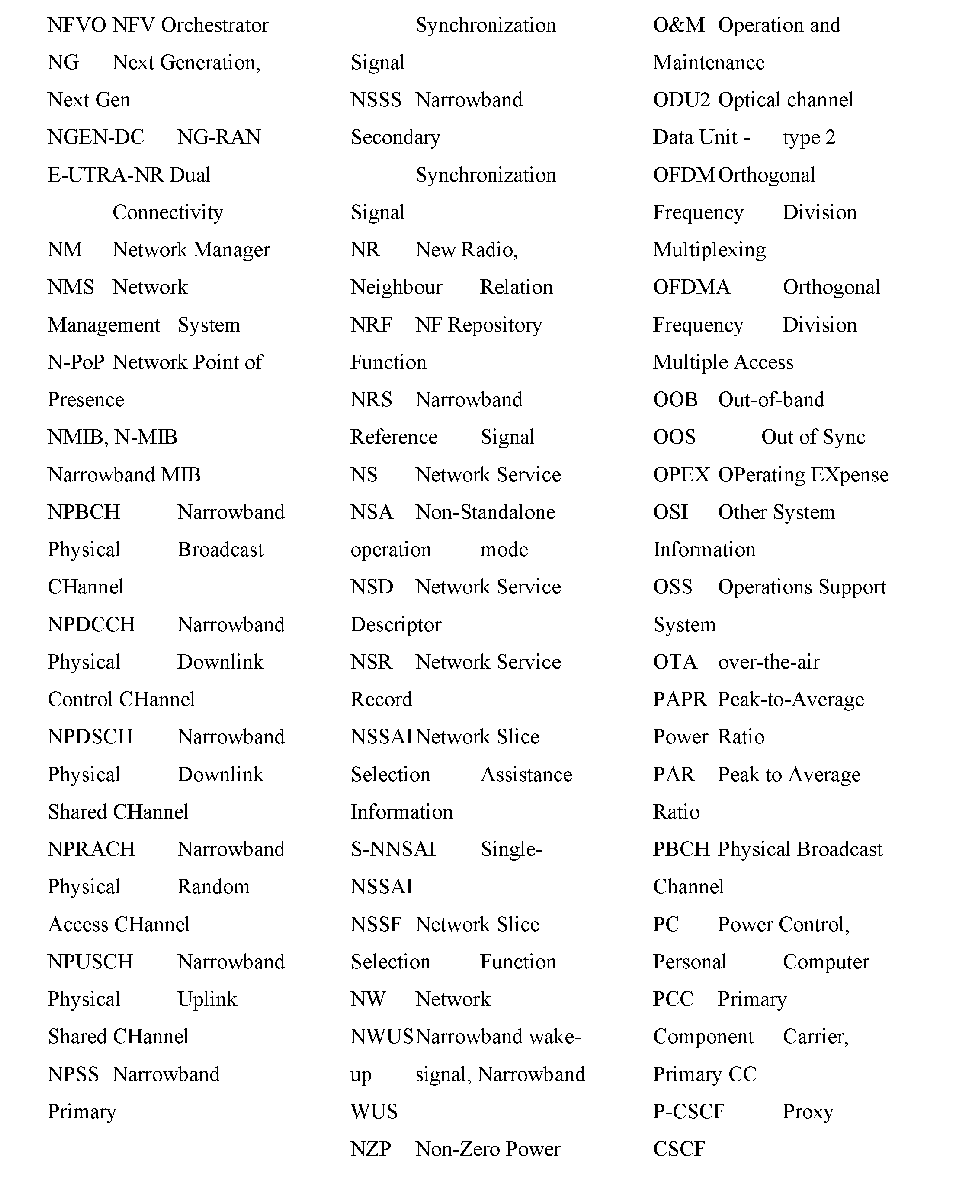

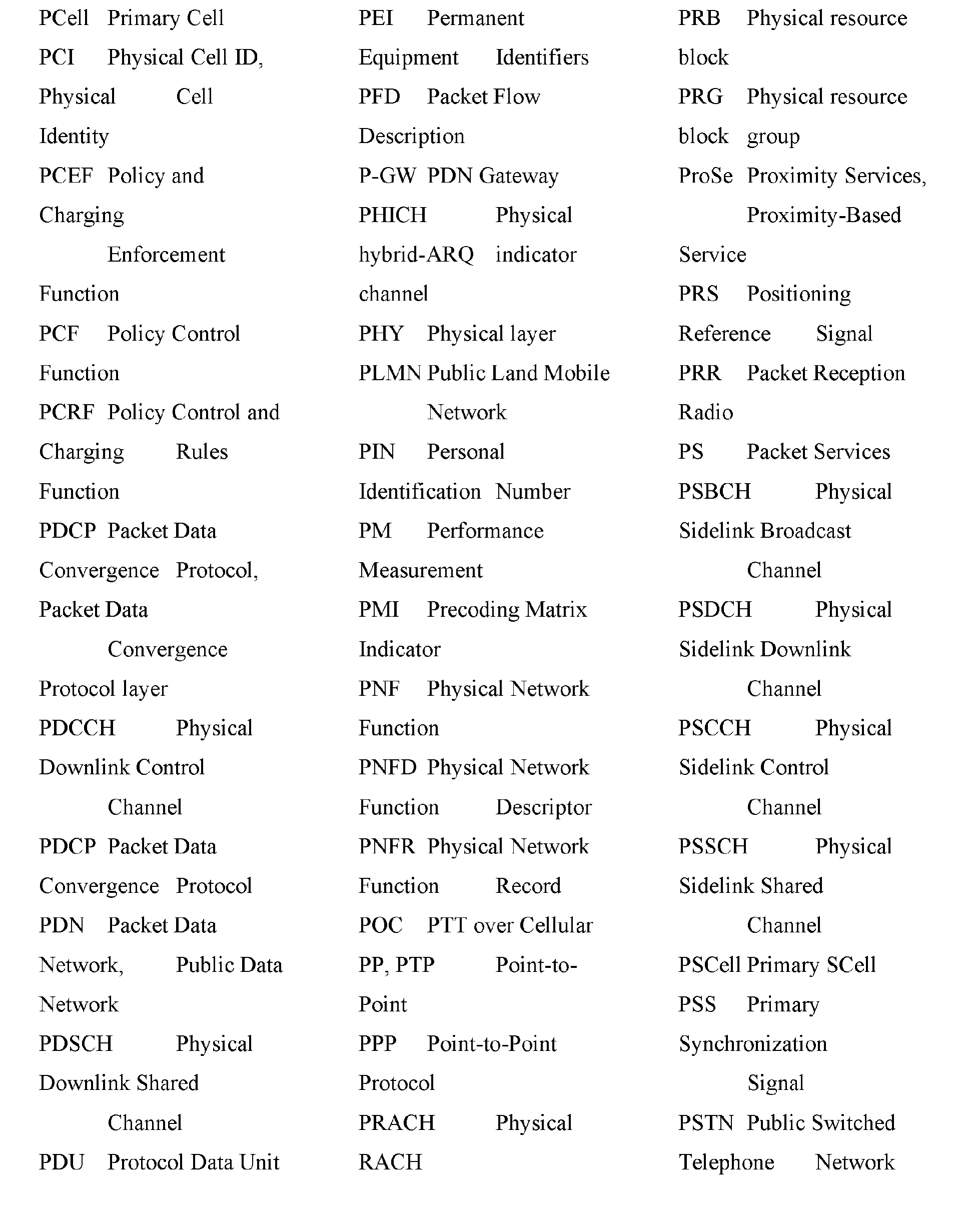

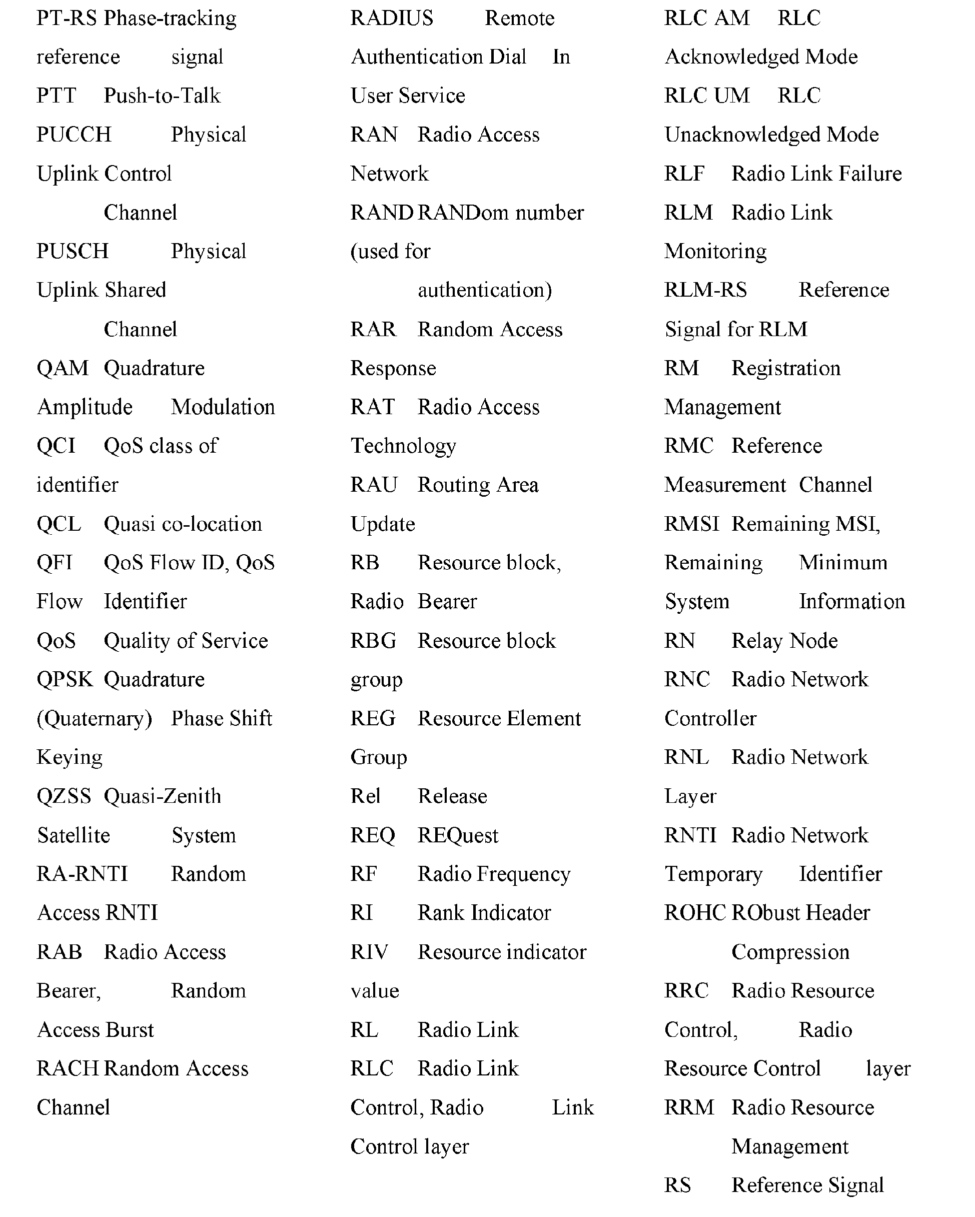

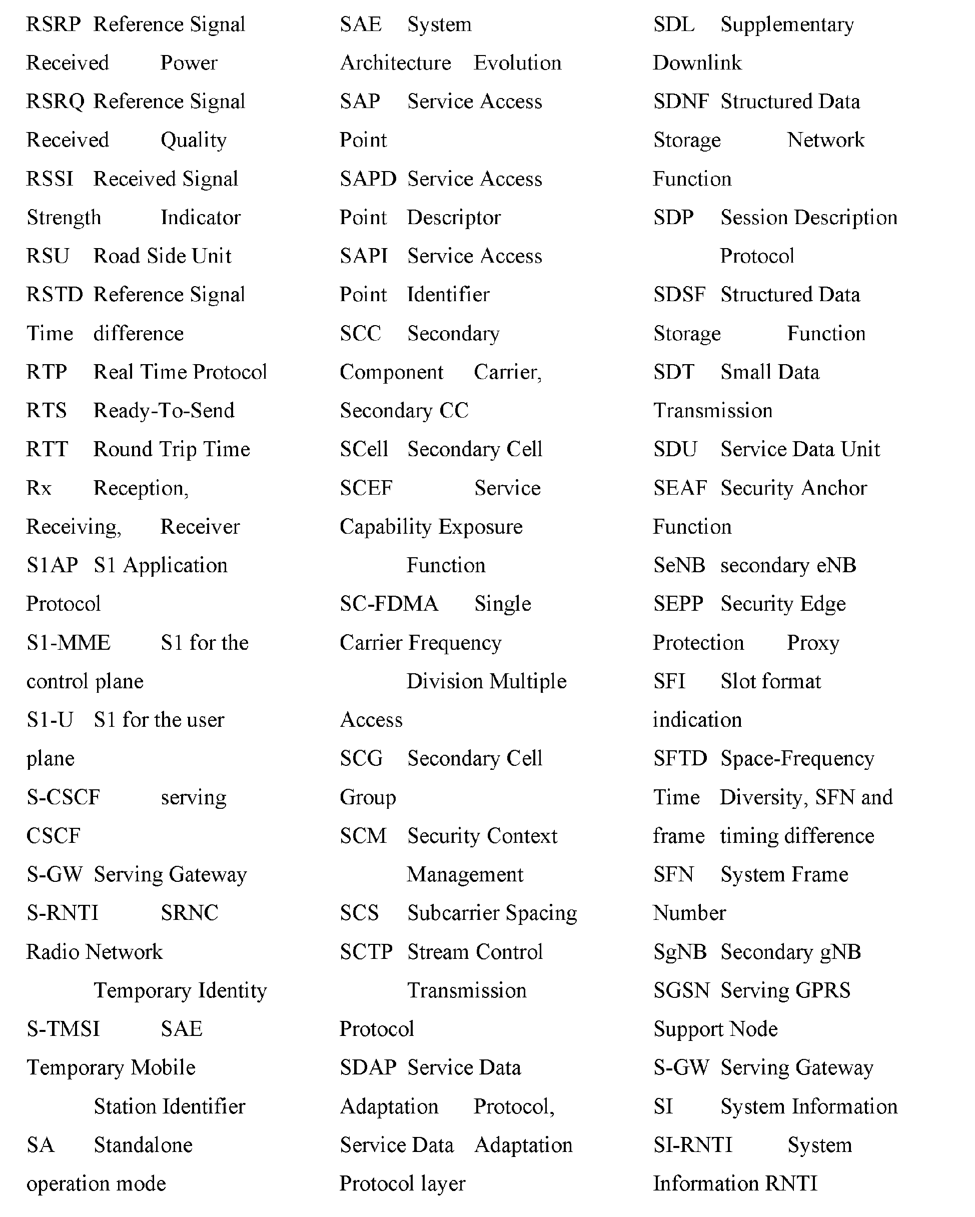

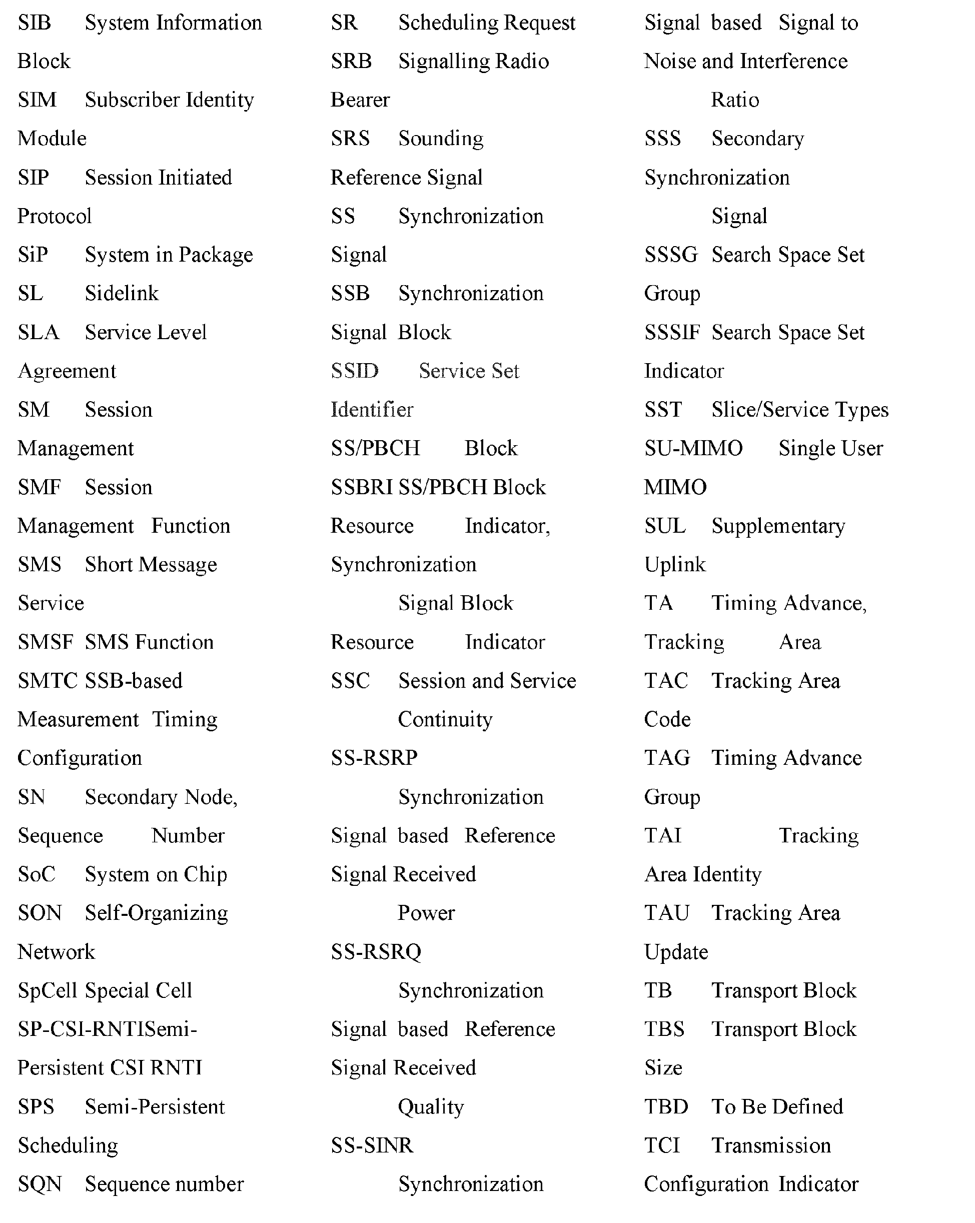

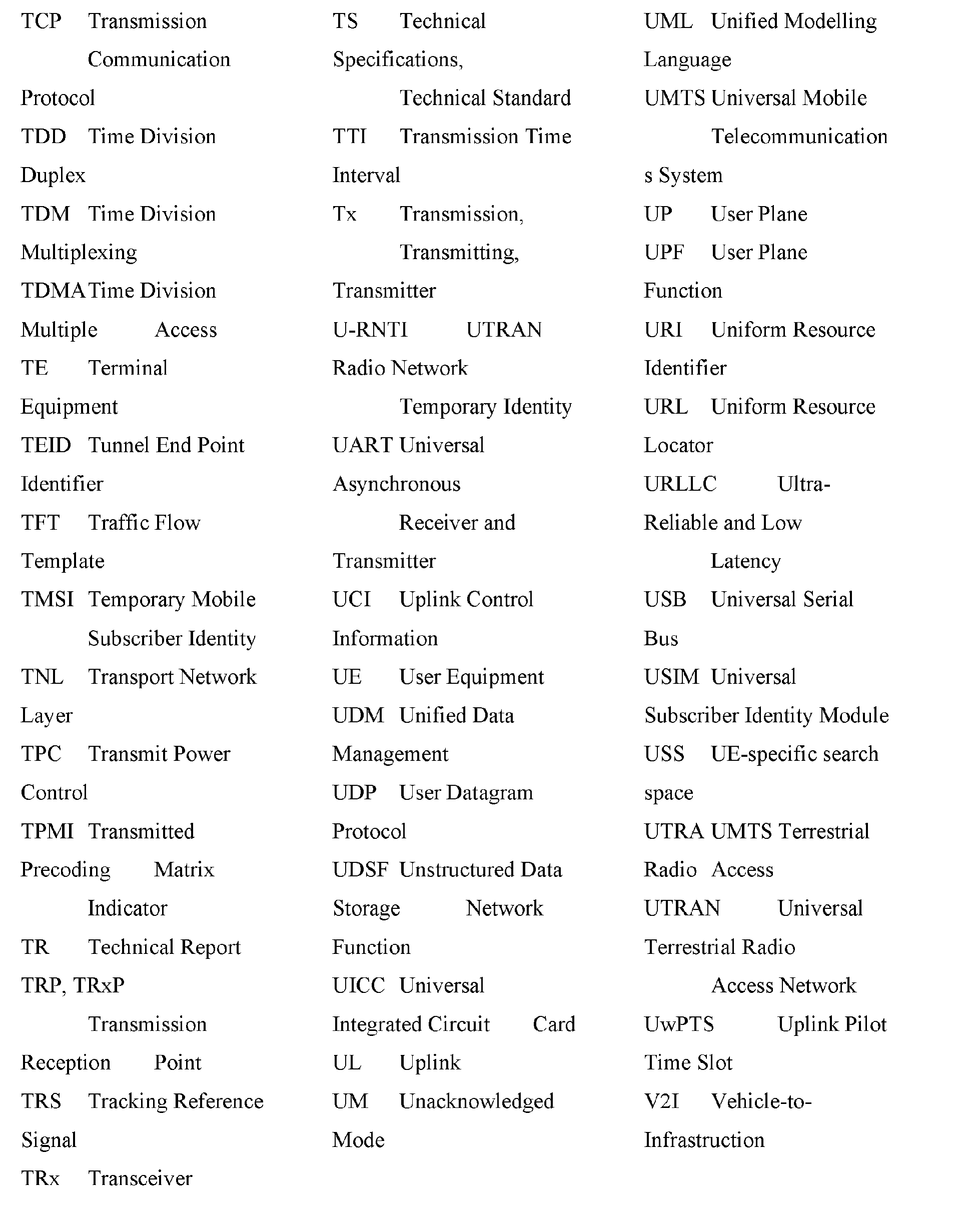

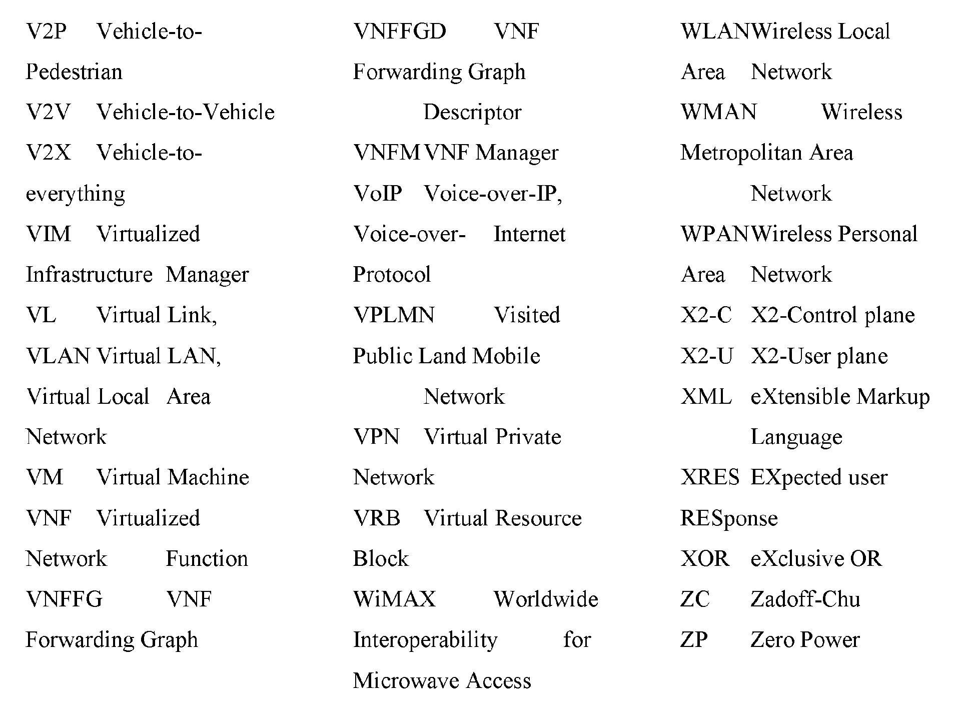

### Terminology

For the purposes of the present document, the following terms and definitions are applicable to the examples and embodiments discussed herein.
The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "LTE" as used herein refers to a device with radio communication capabilities and may describe a remote user of network resources in a communications network. The term "user equipment" or "LTE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the LTE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a LTE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus of a next generation distributed cloud system for resource orchestration, comprising:
one or more processors, configured to:
receive, from one or more computing functions, first information about computing resources for the one or more computing functions;
receive, from a second entity, a request to provide one or more available computing functions for supporting one or more computing services;
select one or more computing functions from the one or more available computing functions for the request, based on the received first information; and
provide the selected one or more available computing functions, in a response, to the second entity.

2. The apparatus of claim 1, wherein the first information received from the one or more computing functions comprises any of:
total capacity and type of resources provided by each computing function;
usage and/or available capacity of each computing function;
status of the computing resources and computing function;
energy efficiency level of the computing resources;
type of computing services supported by each computing function;
location of the computing resources or computing function.

3. The apparatus of any one of claims 1 or 2,
wherein the second entity is a User Equipment, UE.

4. The apparatus of claim 3,
wherein the request to provide the one or more available computing functions for supporting one or more computing services comprises information about any of service location, service type, resource requirements, and QoS requirements.

5. The apparatus of any one of claims 1 to 4, wherein the one or more processors are further configured to:
send a request to a registration and discovery function;
register an orchestration function configured to provide a service or services to manage and orchestrate the computing resources and computing services; and
receive a response indicating a registration result from the registration and discovery function.

6. The apparatus of claim 5, wherein the one or more processors are further configured to register the orchestration function with some or all of the following information:
service area of the orchestration function;
total capacity and types of computing resources orchestrated by the orchestration function;
type of computing services supported by each computing function orchestrated by the orchestration function.

7. The apparatus of claim 1 to 6, wherein a control function is configured to request the selected one or more computing functions to fulfill the service request, and preferably wherein the request from the control function comprises information about any of service location, service type, resource requirements, and/or QoS requirements.

8. The apparatus of claim 7, wherein if the computing function accepts the request of the control function, the control function is configured to inform the second entity to continue the service, and wherein second entity and the computing function are configured to exchange user data to fulfill the one or more computing services.

9. The apparatus of any one of claims 1 to 8, wherein the one or more processors are further configured to send, to a third entity, the first information about the computing resources for the one or more computing functions.

10. The apparatus of claim 9, wherein the one or more processors are configured to select an orchestration function from one or more orchestration functions to request the computing resources, wherein each of the orchestration functions is configured to provide a service or services to manage and orchestrate the computing resources and computing services.

11. The apparatus of claim 10,
wherein the second entity is a User Equipment, UE;
wherein if no suitable orchestration function is known, the control function is configured to request the registration and discovery function to provide one or more available orchestration functions that can serve a UE location and type of service requested.

12. The apparatus of claim 10, wherein if no suitable computing function is known, the control function is configured to request the orchestration function to provide the one or more available computing functions that can serve a service requested by the UE.

13. The apparatus of any one of claims 1 to 12, further comprising:
a resource management function;
wherein the resource management function is configured to receive information regarding computing resources from the selected one or more computing functions, and to provide the information regarding computing resource to an orchestration function.

14. The apparatus of any one of claims 1 to 13,
wherein the second entity is a User Equipment, UE; and
wherein the one or more processors are further configured to send, to the orchestration function, a request, to provide the available one or more orchestration functions that can serve the UE location and type of service requested.

15. A method of a control function, comprising:
receiving, from a user equipment (UE), a request for computing services;
selecting, based on the request for computing services, an orchestration function that is to manage and orchestrate computing resources associated with the requested computing services;
selecting, based on the request for computing services, a computing function, associated with the selected orchestration function, that is to fulfill the request for computing services; and
sending a request to the selected computing function to fulfill the request for computing services;
wherein the request to fulfill the request for computing services includes an indication of information associated with: a service location, a service type, a resource requirement, or a quality-of service (QoS) requirement.
